(19) Europäisches Patentamt
European Patent Office
Office européen des brevets

(11) EP 1 765 887 B1

(12) # EUROPEAN PATENT SPECIFICATION

(45) Date of publication and mention of the grant of the patent:
**26.02.2014 Bulletin 2014/09**

(21) Application number: **05765936.9**

(22) Date of filing: **05.07.2005**

(51) Int Cl.:
***C08F 32/08*** $^{(2006.01)}$ ***C08F 4/70*** $^{(2006.01)}$

(86) International application number:
**PCT/KR2005/002149**

(87) International publication number:
**WO 2006/004376 (12.01.2006 Gazette 2006/02)**

(54) **METHOD OF PRODUCING CYCLIC OLEFIN POLYMERS HAVING POLAR FUNCTIONAL GROUPS**

VERFAHREN ZUR HERSTELLUNG VON CYCLOOLEFINPOLYMEREN MIT POLAREN FUNKTIONELLEN GRUPPEN

PROCÉDÉ DE PRODUCTION DE POLYMÈRES D'OLÉFINES CYCLIQUES PRÉSENTANT DES GROUPES FONCTIONNELS POLAIRES

(84) Designated Contracting States:
**AT BE BG CH CY CZ DE DK EE ES FI FR GB GR HU IE IS IT LI LT LU LV MC NL PL PT RO SE SI SK TR**

(30) Priority: **07.07.2004 KR 2004052612**

(43) Date of publication of application:
**28.03.2007 Bulletin 2007/13**

(73) Proprietor: **LG Chem. Ltd.**
**Seoul 150-721 (KR)**

(72) Inventors:
- **YOON, Sung-Cheol**
  **Daejeon-city 305-509 (KR)**
- **WON, Young-Chul,**
  **104-601 Wonchun Jugong Apt.**
  **Suwon-city,**
  **Kyungki-do 443-755 (KR)**
- **PARK, Young-Whan**
  **Daejeon-city 305-340 (KR)**
- **CHUN, Sung-Ho**
  **Daejeon-city 305-740 (KR)**
- **CHOI, Dai-Seung,**
  **101-1107 Dairim Durae Apt.**
  **Daejeon-city 305-720 (KR)**
- **KIM, Won-Kook,**
  **115-1203 Hwangsil Town 302**
  **Daejeon-city 302-850 (KR)**
- **LIM, Tae-Sun,**
  **7-202 LG Company Housing Apt.**
  **Daejeon-city 305-740 (KR)**
- **KIM, Heon**
  **Yeosu-city,**
  **Jeollanam-do 555-050 (KR)**
- **LEE, Jung-Min**
  **Gumi-city, Kyungsangbuk-do 730-320 (KR)**
- **PAIK, Kyung-Lim**
  **Daejeon-city 301-841 (KR)**

(74) Representative: **HOFFMANN EITLE**
**Patent- und Rechtsanwälte**
**Arabellastrasse 4**
**81925 München (DE)**

(56) References cited:

| | |
|---|---|
| **EP-A1- 1 657 259** | **WO-A1-2004/050726** |
| **JP-A- 2002 212 209** | **JP-A- 2003 040 929** |
| **KR-A- 20030 080 158** | **KR-A- 20040 045 108** |
| **KR-A- 20040 049 946** | **KR-A- 20050 053 096** |
| **KR-A- 20060 039 777** | **US-B1- 6 455 650** |

Remarks:
The file contains technical information submitted after the application was filed and not included in this specification

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 765 887 B1

## Description

### Technical Field

The present invention relates to a method of producing cyclic olefin polymers, and more particularly, to a method of producing cyclic olefin polymers having polar functional groups using a catalyst composed of a palladium compound and a phosphonium salt compound.

### Background Art

Inorganic materials such as silicon oxides or nitrides have been mainly utilized in the information and electronic industries. Recent technical developments and demands for compact and high efficiency devices need new high performance materials. In this respect , a great deal of attention has been paid to polymers which have desirable physicochemical properties such as low dielectric constant and moisture absorption rate, high adhesion to metals, strength, thermal stability and transparency, and a high glass transition temperature ($T_g$ > 250 °C).

Such polymers can be used as insulating layers of semiconductors or TFT-LCDs, protecting films for polarizing plates, multichip modules, integrated circuits (ICs), printed circuit boards, molding materials for electronic components or electronic materials for flat panel displays.

As one of new performance materials,cyclic olefin polymers which are composed of cyclic olefin monomers such as norbornenes exhibit much more improved properties than conventional olefin polymers, in that they show high transparency, heat resistance and chemical resistance, and have a low birefringence and moisture absorption rate. Thus, they can be applied to various applications, e.g., optical components such as CDs, DVDs and POFs (plastic optical fibers), information and electronic components such as capacitor films and low-dielectrics, and medical components such as low-absorbent syringes, blister packagings.

Cyclic olefin polymers are known to be prepared by one of the following three methods: ROMP (ring opening metathesis polymerization), copolymerization with ethylene, and addition polymerization using catalysts containing transition metals such as Ni and Pd. These methods are depicted in Reaction Scheme 1 below. Depending on the central metal, ligand and cocatalyst of a catalyst used in the polymerization reaction, polymerization characteristics and the structure and characteristics of polymers to be obtained may be varied.

Reaction Scheme 1

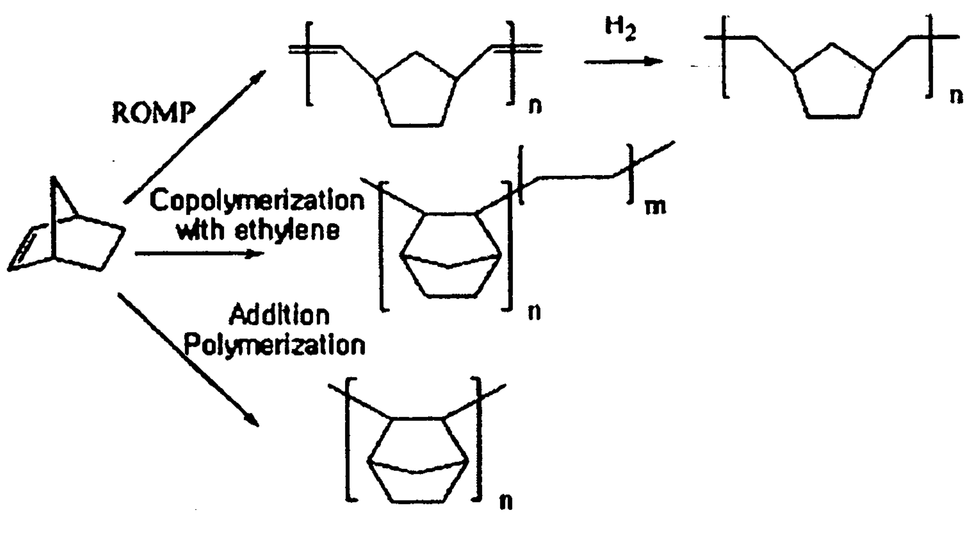


In ROMP, a metal chloride such as $TiCl_4$ or $WCl_6$ or a carbonyl-type organometallic compound reacts with a cocatalyst such as Lewis acid, $R_3Al$ or $Et_2AlCl$ to form active catalyst species such as a metal carbene or a metallocyclobutane which react with double bonds of olefin to provide a ring opened product having double bonds (Ivin, K. J.; O'Donnel, J. H.; Rooney, J. J.; Steward, C. D. Makromol. Chem. 1979, Vol. 180, 1975). A polymer prepared by the ROMP method has one double bond per one monomeric repeating unit, thus, the polymer has poor thermal and oxidative stability and is mainly used as thermosetting resins.

In order to improve physicochemical properties of polymers prepared by the ROMP method, a method of hydrogenation of the ROMP-polymer in the presence of Pd or Raney-Ni catalysts has been proposed. Hydrogenated

polymer shows improved oxidative stability, but still needs to be improved in its thermal stability. Further, a cost increased due to additional processes is against its commercial application.

Ethylene-norbornene copolymers are known to be first synthesized using a titanium-based Ziegler-Natta catalyst by Leuna, Corp., (Koinzer, P. et al., DE Patent No. 109,224). However, impurities remaining in the copolymer deteriorates its transparency and its glass transition temperature ($T_g$) is very low, i.e., 140 °C or lower.

As to the addition polymerization of cyclic olefinic monomers, Gaylord et al. reported a polymerization of norbornene using $[Pd(C_6H_5CN)Cl_2]_2$ as a catalyst (Gaylord, N.G.; Deshpande, A.B.; Mandal, B.M.; Martan, M. J. Macromol. Sci.-Chem. 1977, A11(5), 1053-1070). Furthermore , Kaminsky et al. reported a homopolymerization of norbornene using a zirconium-based metallocene catalyst (Kaminsky, W.; Bark, A.; Drake, I. Stud. Surf. Catal. 1990, Vol. 56, 425). These polymers have a high crystallinity, thermally decompose at a high temperature before they melt, and are substantially insoluble in general organic solvents.

Adhesion of polymers to inorganic surfaces such as silicon, silicon oxide, silicon nitride, alumina, copper, aluminium, gold, silver, platinum, nickel, tantalium, and chromium is often a critical factor in the reliability of the polymer for use as electronic materials. The introduction of functional groups into norbornene monomers enables the control of chemical and physical properties of a resultant norbornene polymer.

U.S. Patent No. 3,330,815 discloses a method of polymerizing norbornene monomers having a polar functional group. However, the catalyst is deactivated by polar functional groups of norbornene monomers, which results in an earlier termination of the polymerization reaction, thereby producing a norbornene polymer having a molecular weight of 10,000 or less.

U.S. Patent No. 5,705,503 discloses a method of polymerizing norbornene monomers having a polar functional group using $((Allyl)PdCl)_2/AgSbF_6$ as a catalyst. However, an excess of the catalyst is required (1/100 to 1/400 molar ratio relative to the monomer) and the removal of the catalyst residues after polymerization is difficult , which causes the transparency of the polymer to be deteriorated due to a subsequent thermal oxidation.

Sen et al. reported a method for polymerizing various ester norbornene monomers in the presence of a catalyst, $[Pd(CH_3CN)_4][BF_4]_2$, in which exo isomers were selectively polymerized, and the polymerization yield was low. (Sen et al., J. Am. Chem. Soc. 1981, Vol. 103, 4627-4629). In addition, a large amount of the catalyst is used (the ratio of catalyst to monomer is 1:100 to 1:400) and it is difficult to remove catalyst residues after the polymerization.

U.S. Patent No. 6,455,650 issued to Lipian et al. discloses a method of polymerizing norbornene monomers having a functional group in the presence of a small amount of a catalyst, $[(R')_zM(L')_x(L')_y]_b[WCA]_d$. However, the product yield in a polymerization of a polar monomer such as an ester-norbomene, is only 5%. Thus, this method is not suitable for the preparation of polymers having polar functional groups.

Sen et al. reported a method for polymerizing an ester-norbornene in the presence of a catalyst system including $[(1,5\text{-Cyclooctadiene})(CH_3)Pd(Cl)]$, $PPh_3$, and $Na^+$ $[3,5\text{-}(CF_3)_2C_6H_3]_4B$, in which the polymerization yield of ester-norbornenes is 40% or lower, the molecular weight of the polymer is 6,500 or lower, and the molar amount of the catalyst used is about 1/400 based on the monomer (Sen et al., Organometallics 2001, Vol. 20, 2802-2812).

Therefore, there is still a demand for an addition-polymerization of cyclic olefins having polar functional groups which is able to meet a certain desired level in the aspect of polymerization yield, a molecular weight of a resultant polymer, and a molar ratio of a catalyst to monomers.

## Disclosure of Invention

### Technical Solution

The present invention provides a method for producing a cyclic olefin polymer having polar functional groups and a high molecular weight in a high yield by using a catalyst which is not deactivated due to polar functional groups, moisture and oxygen.

A cyclic olefin polymer having polar functional groups, which has a high glass transition temperature and a desirable thermal and oxidative stability , a desirable chemical resistance and adhesion to metal is also described.

An optical anisotropic film made from a cyclic olefin polymer having polar functional groups is also described.

According to an aspect of the present invention, there is provided a method of producing cyclic olefin polymers having polar functional groups, which comprises: preparing a catalyst mixture consisting of

i) a procatalyst represented by formula (4) containing palladium and a ligand containing hetero atoms bonded to the metal;

ii) a cocatalyst represented by formula (5) including a salt compound which is capable of providing a phosphonium cation and an anion weakly coordinating to the metal of the procatalyst; the molar ratio of the cocatalyst to the procatalyst being 0.5 - 10:1; and

addition-polymerizing cyclic olefin monomers having polar functional groups in the presence of an organic solvent

and the catalyst mixture at a temperature of 80-150°C, the molar ratio of the procatalyst to the total monomer being 1:2.500 to 1:200.000:

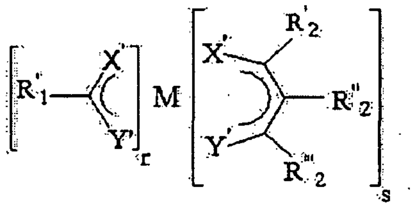 (4)

where each of X' and Y' is a hetero atom selected from S and O;

each of $R_1$', $R_2$', $R_2$" and $R_2$"' is a linear or branched $C_{1-20}$ alkyl, alkenyl or vinyl; a $C_{5-12}$ cycloalkyl optionally substituted by a hydrocarbon; a $C_{6-40}$ aryl optionally substituted by a hydrocarbon; a $C_{7-15}$ aralkyl optionally substituted by a hydrocarbon; or a $C_{3-20}$ alkynyl;

M is palladium; and

each of r and s is an integer from 0 to 2 and r+s = 2, and

$$[H\text{-}P(R_4)_3][Ani] \qquad (5)$$

where $R_4$ is a hydrogen; a linear or branched $C_{1-20}$ alkyl, alkoxy, allyl, alkenyl or vinyl; an optionally substituted $C_{3-12}$ cycloalkyl; an optionally substituted $C_{6-40}$ aryl; an optionally substituted $C_{7-15}$ aralkyl; or a $C_{3-20}$ alkynyl, in which each substituent is a halogen or a $C_{1-20}$ haloalkyl; and

[Ani] is an anion capable of weakly coordinating to palladium of the procatalyst represented by formula (4) and is selected from the group consisting of borate, aluminate, $[SbF_6]$-, $[PF_6]$-, $[AsF_6]$-, perfluoroacetate($[CF_3CO_2]$-), perfluoropropionate($[C_2F_5CO_2]$-), perfluorobutyrate($[CF_3CF_2CF_2CO_2]$-), perchlorate($[ClO_4]$-), p-toluenesulfonate($[p\text{-}CH_3C_6H_4SO_3]$-), $[SO_3CF_3]$-, boratabenzene, and carborane optionally substituted with a halogen.

A cyclic olefin polymer having a polar functional group, produced using the above method is also described.

An optical anisotropic film including a cyclic olefin polymer having a polar functional group is also described.

## Advantageous Effects

According to the olefin polymerization method, deactivation of a catalyst due to a polar functional group of a monomer can be prevented, and thus a polyolefin having a high molecular weight can be prepared with a high yield, and the ratio of catalyst to monomer can be less than 1/5000 due to good activity of the catalyst, and thus removal of catalyst residues is not required.

## Description of Drawings

Figure 1 represents a molecular structure of tricyclohexylphosphonium (tetrakispentafluorophenyl)borate.

## Mode for Invention

In the present embodiment, the deactivation of a catalyst due to a polar functional group of the monomer, moisture and oxygen can be prevented, the catalyst is thermally and chemically stable, thereby a high yield and a high molecular weight of the cyclic olefin polymer can be achieved with a small amount of the catalyst and the removal process of the catalyst residue is not required.

In the method, the procatalyst is very stable even in the presence of a monomer having a polar functional group, moisture and oxygen and the phosphonium cocatalyst does not generate an amine which is produced by the ammonium borate to poison the catalyst. Further, in the reaction of the procatalyst with the cocatalyst, a phosphine is formed to stabilize the cationic species, thereby inhibiting the deactivation of the catalyst by a polar functional group of a monomer, moisture and oxygen.

As to a polymerization temperature, in the case of general organometallic polymerization catalysts, when the polymerization temperature increases, the polymerization yield increases, whereas a molecular weight of a polymer

decreases or catalysts lose the polymerization activity by thermal decomposition (Kaminsky et al. Angew. Chem. Int. Ed., 1985, vol 24, 507; Brookhart et al. Chem. Rev. 2000, vol 100, 1169; Resconi et al. Chem. Rev. 2000, vol 100, 1253).

Meanwhile, a polar group of a norbornene monomer interacts with the catalyst at room temperature to prevent the double bond of a norbornene from coordinating to an active site of the catalyst, thereby resulting in decrease in the polymerization yield and the molecular weight. However, when the polymerization temperature increases, the double bond of a norbornene is easy to insert into the metal-growing polymer chain bond to increase the activity and a β -hydrogen of a growing polymer chain bonded to the metal cannot form a stereo structural environment to be eliminated where it can interact with the catalyst in view of inherent properties of the norbornene monomer, thereby increasing the molecular weight of the polymer (Kaminsky et al. Macromol. Symp. 1995, vol 97, 225). Thus, it is necessary to increase the polymerization temperature. However, most catalysts conventionally used to produce polynorbornenes having polar functional groups tend to be decomposed at 80 °C or higher, and thus polymers having high molecular weights cannot be obtained in a high yield. However, the catalyst of the present embodiment is thermally stable not to be decomposed at 80 °C or higher and prevents the interaction between the polar functional group of the norbornene monomer and the cationic catalyst, and thus a catalyst active site can be formed or recovered, thereby producing a high molecular weight cyclic olefin polymer having a polar functional group in a high yield. When the polymerization temperature is higher than 150 °C, catalyst components are decomposed in solution, and thus it is difficult to produce a cyclic olefin polymer having a polar functional group and a high molecular weight in a high yield.

According to the method of the present embodiment, when a polar functional group in a monomer is an acetyl group, a high yield in polymerization can be obtained with a high molecular weight, which is supported by Examples and Comparative Examples. The catalyst mixture is stable even in the presence of polar functional groups, moisture, oxygen, and other impurities. Thus, while conventional catalysts have good activity only in-situ and in the absence of air, the catalyst mixture of the present embodiment can be stored in a solution for a long period of time, the isolation of solvent is not required, and its activity is maintained even in air. Therefore, the method of the present embodiment can reproducibly be used under various preparation conditions, which is particularly important in industrial mass-production.

That is, the catalyst mixture consisting of (i) a procatalyst represented by formula (4) containing palladium and a ligand containing hetero atoms bonded to the metal and (ii) a cocatalyst represented by formula (5) including a salt compound which is capable of providing a phosphonium cation and an weakly coordinating anion is not decomposed at the polymerization temperature of 80-150°C and is stable in the presence of polar functional groups, moisture and oxygen, and shows high activity.

In the method, borate or aluminate of formula (5) may be an anion represented by formula (2a) or (2b):

$$[M'(R_6)_4] \qquad (2a),$$

$$[M'(OR_6)4] \qquad (2b)$$

where M' is B or Al; $R_6$ is each independently a halogen, a linear or branched $C_{1-20}$ alkyl or alkenyl optionally substituted by a halogen, a $C_{3-12}$ cycloalkyl optionally substituted by a halogen, a $C_{6-40}$ aryl optionally substituted by a $C_{3-20}$ hydrocarbon, a $C_{6-40}$ aryl substituted by a linear or branched $C_{3-20}$ trialkylsiloxy or a linear or branched $C_{18-48}$ tri-arylsiloxy, or a $C_{7-15}$ aralkyl optionally substituted by a halogen.

The cyclic olefin monomer used in the method is a norbornene-based monomer having a polar functional group. A norbornene-based monomer or norbornene derivative means a monomer having at least one norbornene (bicyclo [2.2.2]hept-2-ene) unit. The norbornene-based monomer is represented by formula (3):

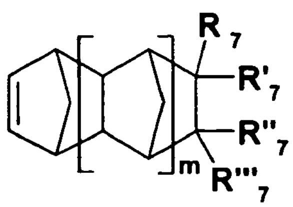

(3)

where m is an integer from 0 to 4; at least one of $R_7$, $R_7'$, $R_7''$ and $R_7'''$ is a polar functional group and the others are nonpolar functional groups; $R_7$, $R_7'$, $R_7''$ and $R_7'''$ can be bonded together to form a saturated or unsaturated $C_{4-12}$ cyclic group or a $C_{6-24}$ aromatic ring, in which the nonpolar functional group is a hydrogen, a halogen, a linear or branched $C_{1-20}$ alkyl, haloalkyl, alkenyl or haloalkenyl, a linear or branched $C_{3-20}$ alkynyl or haloalkynyl, a $C_{3-12}$ cycloalkyl optionally substituted by an alkyl, an alkenyl, an alkynyl, a halogen, a haloalkyl, a haloalkenyl or haloalkynyl, a $C_{6-40}$ aryl optionally

substituted by an alkyl, an alkenyl, an alkynyl, a halogen, a haloalkyl, a haloalkenyl or haloalkynyl, or a $C_{7-15}$ aralkyl optionally substituted by an alkyl, an alkenyl, an alkynyl, a halogen, a haloalkyl, a haloalkenyl or haloalkynyl; and the polar functional group is a non-hydrocarbonaceous polar group having at least one O, N, P, S, Si or B and is $-R^8 OR^9$, $-OR^9$, $-OC(O)OR^9$, $-R^8OC(O)OR^9$, $-C(O)R^9$, $-R^8C(O)OR^9$, $-C(O)OR^9$, $-R^8C(O)R^9$, $-OC(O)R^9$, $-R^8OC(O)R^9$, $-(R^8O)_k-OR^9$, $-(OR^8)_k-OR^9$, $-C(O)-O-C(O)R^9$, $-R^8 C(O)-O-C(O)R^9$, $-SR^9$, $-R^8SR^9$, $SSR^8$, $-R^8SSR^9$, $-S(=O)R^9$, $-R^8S(=O)R^9$, $-R^8C(=S)R^9$, $-R^8C(=S)SR^9$, $-R^8SO_3R^9$, $-SO_3R^9$, $-R^8N=C=S$, -NCO, $R^8$-NCO, -CN, $-R^8CN$, $-NNC(=S)R^9$, $-R^8NNC(=S)R^9$, $-NO_2$, $-R^8NO_2$,

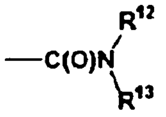 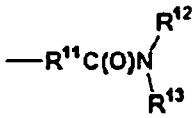 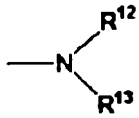 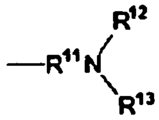

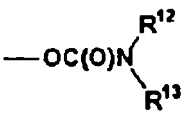 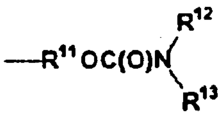 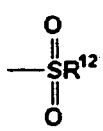 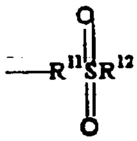 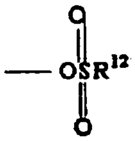 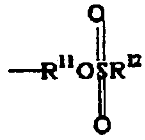

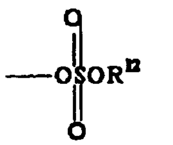 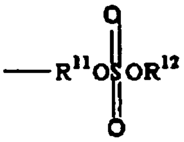 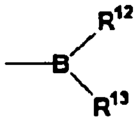 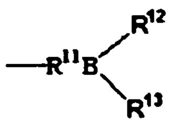 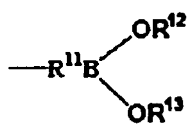

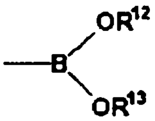 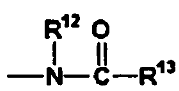 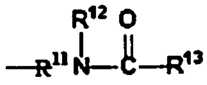 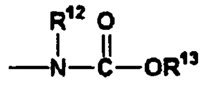 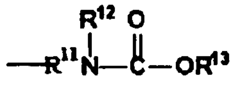

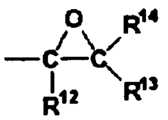 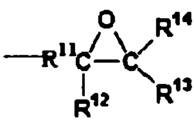 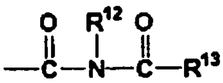 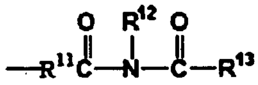

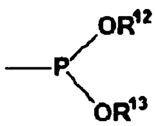 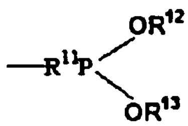 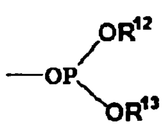 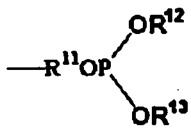

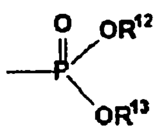 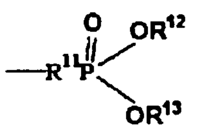 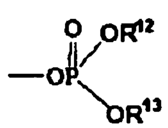 or 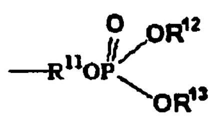 )

in which each of $R^8$ and $R^{11}$ is a linear or branched $C_{1-20}$ alkylene, haloalkylene, alkenylene or haloalkenylene, a linear or branched $C_{3-20}$ alkynylene or haloalkynylene, a $C_{3-12}$ cycloalkylene optionally substituted by an alkyl, an alkenyl, an alkynyl, a halogen, a haloalkyl, a haloalkenyl or haloalkynyl, a $C_{6-40}$ arylene optionally substituted by an alkyl, an alkenyl, an alkynyl, a halogen, a haloalkyl, a haloalkenyl or haloalkynyl, or a $C_{7-15}$ aralkylene optionally substituted by an alkyl, an alkenyl, an alkynyl, a halogen, a haloalkyl, a haloalkenyl or haloalkynyl; each of $R^9$, $R^{10}$, $R^{12}$ and $R^{13}$ is a hydrogen, a halogen, a linear or branched $C_{1-20}$ alkyl, haloalkyl, alkenyl or haloalkenyl, a linear or branched $C_{3-20}$ alkynyl or haloalkynyl, a $C_{3-12}$ cycloalkyl optionally substituted by an alkyl, an alkenyl, an alkynyl, a halogen, a haloalkyl, a haloalkenyl or haloalkynyl, a $C_{6-40}$ aryl optionally substituted by an alkyl, an alkenyl, an alkynyl, a halogen, a haloalkyl, a haloalkenyl or haloalkynyl, a $C_{7-15}$ aralkyl optionally substituted by an alkyl, an alkenyl, an alkynyl, a halogen, a haloalkyl, a haloalkenyl

or haloalkynyl, or an alkoxy, an haloalkoxy, a carbonyloxy or a halo-carbonyloxy; and k is an integer from 1 to 10.

In the method of the present embodiment, the procatalyst and the cocatalyst are a compound represented by formula (4) and a compound represented by formula (5), respectively;

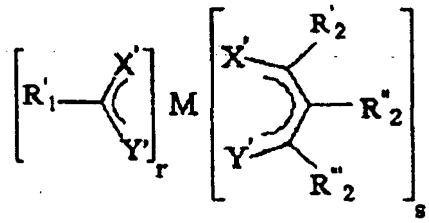

(4)

where each of X' and Y' is a hetero atom selected from S and O; each of $R_1$', $R_2$', $R_2$ and $R_2$''' is a linear or branched $C_{1-20}$ alkyl, alkenyl or vinyl, a $C_{5-12}$ cycloalkyl optionally substituted by a hydrocarbon, a $C_{6-40}$ aryl optionally substituted by a hydrocarbon, a $C_{7-15}$ aralkyl optionally substituted by a hydrocarbon, or a $C_{3-20}$ alkynyl; M is palladium; and each of r and s is an integer from 0 to 2 and r+s = 2, and

$$[H\text{-}P(R_4)_3][Ani] \qquad (5)$$

where $R_4$ is a hydrogen, a linear or branched $C_{1-20}$ alkyl, alkoxy, allyl, alkenyl or vinyl, an optionally substituted $C_{3-12}$ cycloalkyl, an optionally substituted $C_{6-40}$ aryl, an optionally substituted $C_{7-15}$ aralkyl, or a $C_{3-20}$ alkynyl, in which each substituent is a halogen or a $C_{1-20}$ haloalkyl; and [Ani] is an anion capable of weakly coordinating to the palladium of the procatalyst represented by formula (4) and is selected from the group consisting of borate, aluminate, $[SbF_6]$-, $[PF_6]$-, $[AsF_6]$-, perfluoroacetate($[CF_3CO_2]$-), perfluoropropionate($[C_2F_5CO_2]$-), perfluorobutyrate($[CF_3CF_2CF_2CO_2]$-), perchlorate($[ClO_4]$-), p- toluenesulfonate($[p\text{-}CH_3C_6H_4SO_3]$-), $[SO_3CF_3]$-, boratabenzene, and carborane optionally substituted by a halogen .

In the method of the present embodiment, the procatalyst represented by formula (4) and the cocatalyst represented by formula (5) may be a palladium compound represented by formula (4a) and a phosphonium compound represented by formula (5), respectively;

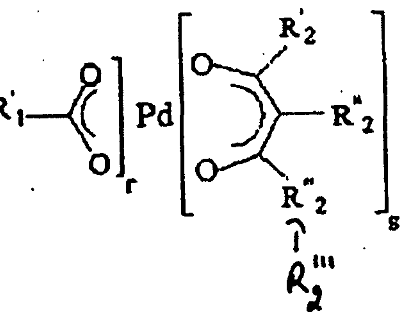

(4a)

where each of $R_1$', $R_2$', $R_2$'' and $R_2$''' is a linear or branched $C_{1-20}$ alkyl, alkenyl or vinyl, a $C_{5-12}$ cycloalkyl optionally substituted by a hydrocarbon, a $C_{6-40}$ aryl optionally substituted by a hydrocarbon, a $C_{7-15}$ aralkyl optionally substituted by a hydrocarbon, or a $C_{3-20}$ alkynyl; and each of r and s is an integer from 0 to 2 and r+s = 2, and $[H\text{-}P(R_4)_3]$ [Ani] (5)

where $R_4$ and [Ani] are as defined above.

The phosphonium compound used as the cocatalyst in the method has an electronically stabilizing ability and thermally and chemically activates transition metal compounds. In the method, the molar ratio of the cocatalyst to the procatalyst containing palladium is in the range of 0.5:1-10:1. When the molar ratio of the cocatalyst to the procatalyst is less than 0.5:1, the effect of activating the procatalyst is inefficient. When the molar ratio of the cocatalyst to the procatalyst is greater than 10:1, an excess of phosphonium compound coordinates to the metal to prevent a norbornene monomer from coordinating to the metal and the cationic catalyst active species is too electronically stabilized to interact with the double bond of a norbornene monomer, thereby resulting in decreasing both polymerization yield and molecular

weight.

The catalyst mixture including the procatalyst and the cocatalyst may be supported on an inorganic support. The inorganic support may be silica, titania, silica/chromia, silica/chromia/titania, silica/alumina, aluminum phosphate gel, silanized silica, silica hydrogel, montmorillonite clay or zeolite. When the catalyst mixture is supported on an inorganic support, a molecular weight distribution of a polymer can be controlled by selecting inorganic support and the polymer morphology can be improved.

The catalyst mixture can be directly used in a solid phase without a solvent or can be mixed in a solvent to form a preformed catalyst in the form of a mixture or a complex of the respective catalyst components, i.e. the palladium compound and the phosphonium compound. Further, each catalyst components can be directly added into the polymerization reaction system without being preformed. When the catalyst mixture is dissolved in a solvent, dichloromethane, dichloroethane, toluene, chlorobenzene or a mixture thereof can be used as the solvent.

The total amount of the organic solvent in the reaction system may be 50-800%, and preferably 50-400%, by weight based on the total monomer in the monomer solution. When the total amount of the organic solvent in the reaction system is less than 50% based on the weight of the total monomer in the monomer solution, the mixing in the polymerization reaction is difficult due to high viscosity of the polymer solution. When the total amount of the organic solvent in the reaction system is greater than 800% based on the weight of the total monomer in the monomer solution, both the polymerization yield and the molecular weight are reduced due to slow polymerization rate.

In the polymerization reaction system, the molar ratio of the catalyst mixture based on the palladium compound to the monomers contained in the monomer solution is in the range of 1:2,500 - 1:200,000. This ratio of the catalyst to the monomers is far smaller than that used in conventional polymerization reaction system for preparing a polar cyclic olefin polymer, however it is sufficient to exhibit catalytic activity in the method of the present invention for preparing a high molecular weight of a cyclic olefin polymer. Preferably, the molar ratio of the catalyst system to the monomers is in the range of 1: 5,000~1: 20,000, and more preferably 1:10,000-1:15,000.

When the molar ratio of the procatalyst to the monomer is greater than 1:2,500, it is difficult to remove the catalyst residue in polymer. When the molar ratio of the procatalyst to the monomer is less than 1:200,000, the catalytic activity is low.

A norbornene addition polymer having a polar functional group produced using the method of the present embodiment includes at least 0.1-99.9 mol% of a norbornene-based monomer having a polar functional group, in which the norbornene having a polar functional group is composed of a mixture of endo and exo isomers and the deterioration of the catalytic activity by endo-isomers containing polar functional groups can be avoided and thus a composition ratio of the mixture is not critical for polymerization performance. In the method, the monomer solution may further include cyclic olefin having non-polar functional group.

In accordance with the method of the invention, a homopolymer is prepared by polymerizing same norbornene-based monomer containing a polar functional group, or a copolymer including di-, tri- and multi-copolymers is prepared by polymerizing different polar functional norbornene-based monomers, or a copolymer including di-, tri- and multi-copolymers is prepared by polymerizing a polar functional norbornene-based monomer and a norbornene monomer having non-polar functional group.

In accordance with the method of the present invention, the cyclic olefin polymer containing polar functional groups having a molecular weight of 100,000 or more can be prepared in a yield of 40% or higher. In order to fabricate an optical film using the cycloolefin polymer, the molecular weight of the cycloolefin polymer is preferably controlled to 100,000-1,000,000. To control the molecular weight, a linear or branched cyclic $C_{1-20}$ olefin may be further used. Examples of the olefin include 1-hexene, 1-octene, cyclopentene, ethylene. Such an olefin is added to the end of extending polymer chain and a β-hydrogen of the added olefin is easily eliminated, thereby producing a polymer having a desirable molecular weight.

In conventional polymerization system, cyclic olefin polymers containing polar functional groups is prepared in a very low yield and in a low molecular weight, whereas the present method produces a high molecular weight of a cycloolefin polymer containing polar functional groups in a high yield.

A cyclic olefin polymer having a polar group is provided. Preferably, a norbornene-based polymer having a polar functional group produced according to the method of the previous embodiment is an addition-polymer of a cyclic olefinic monomer represented by formula (3) and has a weight average molecular weight ($M_w$) of 10,000-1,000,000.

When the weight average molecular weight is less than 10,000, a brittle film can be produced. When the weight average molecular weight is greater than 1,000,000, it is difficult to dissolve the polymer in an organic solvent, and thus the processibility is poor.

The norbornene-based polymer containing polar functional groups prepared in accordance with the method of the present invention is transparent, has sufficient adhesion to metals or polymers containing different polar functional groups, thermal stability and strength, and exhibits a low dielectric constant sufficient to be used as insulating electronic materials. The cyclic olefin polymer produced by the present invention has a desirable adhesion to substrates of electronic components without requiring a coupling agent, and at the same time, a sufficient adhesion to metal substrates, e.g.,

Cu, Ag and Au. Further, the cyclic olefin polymer of the present invention exhibits a desirable optical properties so that it can be used as materials for protective films of polarizing plates and electronic components such integrated circuits (ICs), printed circuit boards, multichip modules.

The polymer can be used to produce an optical anisotropic film capable of controlling a birefringence, which could not be produced with the conventional method.

A conformational unit of a general cyclic olefin has one or two stable rotation conditions, and thus can achieve an extended form such as polyamide having a rigid phenyl ring as a backbone. When a polar functional group is introduced into a norbornene-based polymer with an extended form, the interaction between molecules increases compared to polymers having simple forms, and thus packing of molecules has a directional order, thereby producing optical and electronic anisotropy.

The birefringence can be controlled according to the type and the amount of polar functional group in the cyclic olefin polymer. In particular, the birefringence in a direction through the film thickness is easily controlled, and thus the polymer of the present embodiment can be used to produce an optical compensation film for various modes of liquid crystal display (LCD).

The optical anisotropic film of the cyclic olefin polymer having a polar functional group can be prepared by a solution casting or can be prepared with a blend of one or more cyclic olefin polymers.

In order to prepare a film by solution casting, it is preferable to introduce a cyclic olefin polymer in a solvent in amount of 5-95% by weight, and preferably 10-60% by weight, and stirring the mixture at room temperature. The viscosity of the prepared solution is 100-10,000 cps, and more preferably 300-8000 cps for solution casting. To improve mechanical strength, heat resistance, light resistance, and manipulability of the film, additives such as a plasticizer, a anti-deterioration agent, a UV stabilizer or an antistatic agent can be added.

The optical anisotropic film thus prepared has a retardation value (Rth) of 70 to 1000 nm, as defined by the following Equation 1 :

$$R_{th} = \Delta (n_y - n_z) \times d$$

(1)

where $n_y$ is a refractive index of an in-plane fast axis measured at 550 nm, n is a refractive index toward thickness direction measured at 550 nm, and d is a film thickness.

The optical anisotropic film meets a refractive index requirement of

$$n_x \cong n_y > n_z ,$$

in which $n_x$ is a refractive index of an in-plane slow axis, $n_y$ is a refractive index of an in-plane fast axis, and $n_2$ is a refractive index toward thickness direction , and thus can be used as a negative C-plate type optical compensation film for LCD.

Hereinafter, the present invention will be described in more detail with reference to the following Examples.

In the following Preparation Examples and Examples, all operations handling compounds sensitive to air or water were carried out using standard Schlenk technique or dry box technique. Nuclear magnetic resonance spectra were obtained using Bruker 400 and 600 spectrometers . A molecular weight and a molecular weight distribution of a polymer were determined by gel permeation chromatography (GPC) using standard polystyrene samples. Toluene, hexane and $Et_2O$ were distilled and purified in sodium/ benzophenone and $CH_2Cl_2$ was distilled and purified in $CaH_2$.

Preparation of cocatalyst

Preparation Example 1: Preparation of $(Cy)_3PHCl$

$(Cy)_3P$ (2.02 g, 7.2 mmol; Cy = cyclohexyl) was dispersed in $Et_2O$ (150 mL) in a 250 mL Schlenk flask. Then, anhydrous HCl (14.4 mL, 1.0 M in ether) was added to the solution at room temperature to give a white solid. After stirring for about 20 minutes, the solid was filtered through a glass filter and washed three times with $Et_2O$ (80 mL). Thereafter, the residual solvent was removed at room temperature in vacuum to obtain $(Cy)_3PHCl$ (86%, 1.95 g).

$^1$H-NMR (600MHz, $CD_2Cl_2$) : δ7.02~6.23 (d, 1H, $J_{H-P}$=470 Hz), 2.56 ~ 1.30 (m, 33H); $^{13}$C-NMR (600MHz, $CD_2Cl_2$) : δ28.9 (d), 28.5 (d), 26.8 (d), 25.6 (s). $^{31}$P-NMR (600MHz, $CD_2Cl_2$) : δ 22.98 (d, $J_{P-H}$=470 Hz).

Preparation Example 2: Preparation of $(n\text{-}Bu)_3PHCl$

$(n\text{-}Bu)_3P$ (2.0 g, 10.0 mmol, n-Bu=n-butyl) was dispersed in $Et_2O$ (100 mL) in a 250 mL Schlenk flask. Then, anhydrous HCl (20.0 mL, 1.0 M in ether) was added to the solution at room temperature to give a white solid. After stirring for about 20 minutes, the solid was filtered through a glass filter and washed three times with $Et_2O$ (80 mL). Thereafter, the residual solvent was removed at room temperature in vacuum to obtain $(n\text{-}Bu)_3PHCl$ (90%, 2.15 g).

Preparation Example 3: Preparation of $[(Cy)_3PH][B(C_6F_5)_4]$

$[Li][B(C_6F_5)_4]$ (1.0 g, 1.46 mmol) was suspended in $CH_2Cl_2$ (20 mL) in a 100 mL Schlenk flask and the $CH_2Cl_2$ (20 mL) solution of $(Cy)_3PHCl$ (0.56 g, 1.75 mmol) prepared in Example 1 was slowly added. After stirring for 1 hour, the resulting slurry was filtered to yield a dark yellow filtrate and the solvent was removed in vacuum to obtain tricyclohexylphosphonium(tetrakispentafluorophenyl)borate $[(Cy)_3PH][B(C_6F_5)_4]$ (90%, 1.26 g).

$^1H$-NMR (600MHz, $CD_2Cl_2$): $\delta$5.32 ~4.65 (d, 1H, $J_{H\text{-}P}$=440 Hz), 2.43 ~ 1.33 (m, 33H); $^{13}C$-NMR (600MHz, $CD_2Cl_2$): $\delta$149.7, 148.1, 139.7, 139.2, 138.1, 138.0, 137.8, 136.2, 125.1, 124.9, 29.0, 28.8, 26.7 (d), 25.4 (s). $^{31}P$-NMR (600MHz, $CD_2Cl_2$): 31.14 (d, J =440 Hz). $^{19}F$-NMR (600MHz, $CD_2Cl_2$): -130.90, -161.51, -163.37.

Crystals suitable for an X-ray diffraction study were grown from dichloromethane solution. The result of an X-ray crystal structure determination is presented in Figure 1. Interestingly, the structure shows that the nonbonding interaction between the phosphorous atom of $[(Cy)_3PH]$ part and the fluorine atom of $[B(C_6F_5)_4]$ part exists.

Preparation Example 4: Preparation of $[(Cy)_3PH][(B(C_6F_5)_4)$

$[(Cy)_3PH][(B(C_6F_5)_4]$ was prepared in the same manner as described in Preparation Example 3, except that $[Na][B(C_6F_5)_4]$ or $[MgBr][B(C_6F_5)_4]$ was used instead of $[Li]$ $[B(C_6F_5)_4]$. The synthesis yield was about 90% similarly to Example 3.

Preparation Example 5: Preparation of $[(n\text{-}Bu)_3PH][(B(C_6F_5)_4)$

$[Li][B(C_6F)_5]_4$ (1.0 g, 1.46 mmol) was suspended in $CH_2Cl_2$ (20 mL) in a 100 mL Schlenk flask and the $CH_2Cl_2$ (20 mL) solution of $(n\text{-}Bu)_3PHCl$ (0.42 g, 1.75 mmol) prepared in Example 2 was slowly added. After stirring for 1 hour, the resulting slurry was filtered to yield a dark yellow filtrate and the solvent was removed in vacuum to obtain tri n-butylphosphonium(tetrakispentafluorophenyl) borate $[(n\text{-}Bu)_3PH][B(C_6F_5)_4]$ (87%, 1.12 g).

Preparation Example 6: Preparation of $[(t\text{-}Bu)_3PH][(B(C_6F_5)_4)$

$(t\text{-}Bu)_3P$ (0.35 g, 1.73 mmol, t-Bu=t-butyl) was dispersed in $Et_2O$ (30 mL) in a 250 mL Schlenk flask. Then, anhydrous HCl (1.9 mL, 1.0 M in ether) was added to the solution at room temperature to afford a white solid. After stirring for about 20 minutes, the solid was filtered through a glass filter and washed three times with $Et_2O$ (30 mL). Thereafter, the residual solvent was removed at room temperature in vacuum to obtain $(t\text{-}Bu)_3PHCl$ as a white solid.

$(t\text{-}Bu)_3PHCl$ was dissolved in $CH_2Cl_2$ (10 mL). In a glove box, $[Li][B(C_6F_5)_4]$ (1.07 g, 1.56 mmol) was placed in a 100 mL schlenk flask and dissolved in $CH_2Cl_2$ (20 mL). Then, the $(t\text{-}Bu)_3PHCl$ solution was added dropwise to the $[Li]$ $[B(C_6F_5)_4]$ solution. After stirring for 1 hour, the resulting slurry was filtered to yield a green filtrate and the solvent was removed in vacuum to obtain tri t-butylphosphonium(tetrakispentafluorophenyl)borate $[(t\text{-}Bu)_3PH][B(C_6F_5)_4]$ (67%, 1.05 g).

$^1H$-NMR (600MHz, $CD_2Cl_2$) : $\delta$5.34 ~4.63 (d, 1H, $J_{H\text{-}P}$=440 Hz), 1.61 (d, 27H); $^{13}C$-NMR (600MHz, $CD_2Cl_2$) : $\delta$149.5, 147.9, 139.6, 138.0, 137.7, 136.0, 124.4, 38.3, 30.4. $^{31}P$-NMR (600MHz, $CD_2Cl_2$) : 63.0 (d, $J_{P\text{-}H}$=440 Hz). $^{19}F$-NMR (600MHz, $CD_2Cl_2$) : -133.3, -163.9, -167.8.

Preparation Example 7: Preparation of $[(Et)_3PH][(B(C_6F_5)_4)$

$(Et)_3P$ (0.8 g, 6.77 mmol; Et = ethyl) was dispersed in $Et_2O$ (50 mL) in a 250 mL Schlenk flask. Then, anhydrous HCl (7.4 mL, 1.0 M in ether) was added to the solution at room temperature to afford a white solid. After stirring for about 20 minutes, the solid was filtered through a glass filter and the resultant was washed with hexane (30 mL). Thereafter, the residual solvent was removed at room temperature in vacuum to obtain $(Et)_3PHCl$ as a white solid.

$(Et)_3PHCl$ was dissolved in $CH_2Cl_2$ (10 mL). In a glove box, $[Li][B(C_6F_5)_4]$ (4.41 g, 6.43 mmol) was placed in a 100 mL Schlenk flask and dissolved in $CH_2Cl_2$ (50 mL). Then, the $(Et)_3PHCl$ solution was added dropwise to the $[Li]$ $[B(C_6F_5)_4]$ solution. After stirring for 1 hour, the resulting slurry was filtered to yield a green filtrate and the solvent was removed in vacuum to obtain tri-ethylphosphonium(tetrakispentafluorophenyl)borate $[(Et)_3PH][B(C_6F_5)_4]$ (54%, 2.91 g).

$^1H$-NMR (600MHz, $CD_2Cl_2$) : δ6.06 (m, 0.5H), 5.30 (m, 0.5H), 2.28 (m, 6H), 1.40 (m, 9H); $^{13}C$-NMR (600MHz, $CD_2Cl_2$) : δ149.5, 147.9, 139.7, 138.0, 137.9, 137.7, 136.1, 124.6, 10.6 (d), 6.8 (d). $^{31}P$-NMR (600MHz, $CD_2Cl_2$): 26.3 (d). $^{19}F$-NMR (600MHz, $CD_2Cl_2$): -133.5, -163.7, -167.8.

Preparation of cyclic olefin addition-polymers

Example 1 : Polymerization of 5-norbornene-2-allylacetate

5-norbornene-2-allylacetate ($NB-CH_2-O-C(O)-CH_3$) (5 mL, 30.9 mmol, NB=norbornene) and toluene (18 mL) were charged into a 250 mL Schlenk flask. Palladium acetate ($(Pd(OAc)_2)$(OAc=acetate, 0.46 mg, 2.06 μ mol) and $[(Cy)_3PH][(B(C_6F_5)_4]$ (5.0 mg, 5.2 μ mol) were dissolved in $CH_2Cl_2$ (1 mL) and added to the monomer solution. While the reaction mixture was stirred for 18 hours at 90 °C the reaction mixture became viscous. After the reaction was completed, 100 ml of toluene was added into the viscous solution to dilute it. The solution was poured into an excess of ethanol to precipitate a white polymer, which was filtered through a glass funnel, washed with ethanol, and dried *in vacuo* at 80 °C for 24 hours to yield 5-norbornene-2-allylacetate polymer (4.73 g: 92.2 % by weight based on the total weight of used monomers). The weight average molecular weight (Mw) of the polymer was 250,071 and Mw/Mn was 2.70.

Example 2: Polymerization of 5-norbornene-2-allylacetate

A polymer of 5-norbornene-2-allylacetate was obtained in the same manner as described in Example 1, except that $Pd(OAc)_2$(0.14 mg, 0.62 μ mol) and $[(Cy)_3PH]$ $[(B(C_6F_5)_4)$ (1.2 mg, 1.24 μ mol) were used and the polymerization temperature was 100 °C. The resulting polymer was obtained in 4.00 g of yield (78 % by weight based on the total weight of used monomers). The weight average molecular weight (Mw) of the polymer was 262,149 and Mw/Mn was 2.09.

Example 3: Copolymerization of 5-norbornene-2-allylacetate and 5-butylnorbornene

5-norbornene-2-allylacetate ($NB-CH_2-O-C(O)-CH_3$) (5 mL, 30.9 mmol), 5-butylnorbornene (1.3 mL, 7.7 mmol), and toluene (7.3 mL) were charged into a 250 mL Schlenk flask. $Pd(OAc)_2$ (0.17 mg, 0.77 μ mol) and [(Cy) PH][(B $(C_6F_5)_4)$ (1.48 mg, 1.55 μ mol) were dissolved in $CH_2Cl_2$ (1 mL) and added to the monomer solution. While the reaction mixture was stirred for 18 hours at 90 °C the reaction mixture became viscous. After the reaction was completed, 120 ml of toluene was added into the viscous solution to dilute it. The solution was poured into an excess of ethanol to precipitate a white polymer, which was filtered through a glass funnel, washed with ethanol, and dried *in vacuo* at 80 °C for 24 hours to yield 5-norbornene-2-allylacetate/5-butylnorbornene copolymer (4.35 g: 69.2 % by weight based on the total weight of used monomers). The weight average molecular weight (Mw) of the copolymer was 303,550 and Mw/Mn was 2.16.

Example 4: Copolymerization of 5-norbornene-2-allylacetate and 5-butylnorbornene

5-norbornene-2-allylacetate and 5-butylnorbornene were copolymerized in the same manner as described in Example 3, except that $Pd(OAc)_2$ (0.09 mg, 0.39 μ mol) and $[(Cy)_3PH][(B(C_6F_5)_4)$ (0.74 mg, 0.77 μ mol) were used. The resulting polymer was obtained in 2.9 g of yield (46 % by weight based on the total weight of used monomers). The weight average molecular weight (Mw) of the polymer was 362,680 and Mw/Mn was 1.96.

Example 5: Copolymerization of 5-norbornene-2-allylacetate, 5-butylnorbornene and 5-norbornene-2-carboxylic methylester

5-norbornene-2-allylacetate (5 mL, 30.9 mmol), 5-butylnorbornene (1.2 mL, 6.6 mmol), 5-norbornene-2-carboxylic methylester (1 mL, 6.6 mmol) and toluene (12.4 mL) were charged into a 250 mL Schlenk flask. $Pd(OAc)_2$ (0.66 mg, 2.94 μ mol) and [(Cy) PH][(B(C $_6F_5)_4)$ (5.65 mg, 5.88 μ mol) were dissolved in $CH_2Cl_2$ (1 mL) and added to the monomer solution. While the reaction mixture was stirred for 18 hours at 90 °C the reaction mixture became viscous. After the reaction was completed, 120 ml of toluene was added into the viscous solution to dilute it. The solution was poured into an excess of ethanol to precipitate a white polymer, which was filtered through a glass funnel, washed with ethanol, and dried *in vacuo* at 80 °C for 24 hours to yield 5-norbornene-2-allylacetate/5-butylnorbornene / 5-norbornene-2-carboxylic methylester polymer (6.45 g: 90.5 % by weight based on the total weight of used monomers). The weight average molecular weight (Mw) of the polymer was 211,891 and Mw/Mn was 2.67.

Example 6: Copolymerization of 5-norbornene-2-allylacetate, 5-butylnorbornene and 5-norbornene-2-carboxylic methylester

5-norbornene-2-allylacetate, 5-butylnorbornene and 5-norbornene-2-carboxylic methylester were copolymerized in the same manner as in Example 5, except that $Pd(OAc)_2$ (0.20 mg, 0.88 μ mol) and $[(Cy)_3PH][(B(C_6F_5)_4)$ (1.70 mg, 1.77 μ mol) were used. The resulting polymer was obtained in 3.3 g of yield (46.7 % by weight based on the total weight of used monomers). The weight average molecular weight (Mw) of the polymer was 261,137 and Mw/Mn was 2.01.

Examples 7-13: Polymerization of 5-norbornene-2-allylacetate

Polymers of 5-norbornene-2-allylacetate were prepared in the same manner as described in Example 1, except that the molar ratios of $[(Cy)_3PH][(B(C_6F_5)_4)$ to $Pd(OAc)_2$ were changed to 2:1, 1:1, 2:3, 1:2, 1:4 and 1:8. 5-norbornene-2-allylacetate (4 mL, 24.7 mmol) and toluene (12 mL) were used and polymerization temperature and time were 90 °C and 4 hours, respectively. The results are shown in Table 1 below.

Table 1

| | $Pd(OAc)_2$ (mg) | $[HP(Cy)_3][B(C_6F_5)_4]$(mg) | Pd/B (molar ratio) | Yield | | Mw | Mw/Mn |
|---|---|---|---|---|---|---|---|
| | | | | [g] | [%] | | |
| Example 7 | 1.1 | 2.4 | 2/1 | 1.77 | 43.2 | 333,400 | 2.11 |
| Example 8 | 1.1 | 4.7 | 1/1 | 3.52 | 86.0 | 272,800 | 2.28 |
| Example 9 | 1.1 | 7.1 | 2/3 | 3.82 | 93.2 | 260,000 | 2.56 |
| Example 10 | 1.1 | 9.5 | 1/2 | 3.83 | 93.4 | 256,300 | 2.49 |
| Example 11 | 1.1 | 19.0 | 1/4 | 3.80 | 90.5 | 221,600 | 2.45 |
| Example 12 | 1.1 | 28.4 | 1/6 | 3.39 | 82.7 | 194,100 | 2.25 |
| Example 13 | 1.1 | 38.0 | 1/8 | 3.30 | 80.5 | 193,200 | 2.20 |

Example 14-16: Polymerization of 5-norbornene-2-allylacetate

5-norbornene-2-allylacetate was polymerized together with cyclopentene in molar ratios of cyclopentene to 5-norbornene-2-allylacetate of 10:1, 5:1 and 7:3. 5 - norbornene-2-allylacetate (10 mL, 61.7 mmol) and toluene (20 mL) were charged onto a 250 mL Schlenk flask. $Pd(OAc)_2$ was used in a molar ratio of 1:5000 based on total amount of cyclopentene and the monomer and the molar ratio of $[(Cy)_3PH][(B(C_6F_5)_4)$ to $Pd(OAc)_2$ was 2:1. The experimental procedure was carried out in the same manner as described in Example 1 and the result was shown in Table 2.

Table 2

| | Monomer /Cp (molar ratio) | Cp(mL) | $Pd(OAc)_2$ (mg) | Yield | Mw | Mn | Mw/Mn |
|---|---|---|---|---|---|---|---|
| Example 14 | 10/1 | 0.54 | 3.1 | 9.7 g (91 %) | 136,701 | 56,387 | 2.42 |
| Example 15 | 5/1 | 1.4 | 3.5 | 9.4 g (83.2 %) | 76,135 | 28,945 | 2.63 |
| Example 16 | 7/3 | 2.3 | 4.0 | 9.2 g (76 %) | 62,607 | 25,584 | 2.45 |

Example 17: Polymerization of 5-norbornene-2-allylacetate

5-norbornene-2-allylacetate (10 mL, 61.7 mmol) and wet toluene (35 mL) were charged into a 250 mL Schlenk flask in air. $Pd(OAc)_2$ (0.92 mg, 4.11 μmol) and $[(Cy)_3 PH][(B(C_6F_5)_4)$ (7.9 mg, 8.23 μ mol) were dissolved in $CH_2Cl_2$ (1mL) and added to the monomer solution. While the reaction mixture was stirred for 18 hours at 90 °C the reaction mixture became viscous. After the reaction was completed, 120 ml of toluene was added into the viscous solution to dilute it. The solution was poured into an excess of ethanol to precipitate a white polymer, which was filtered through a glass funnel, washed with ethanol, and dried *in vacuo* at 80 °C for 24 hours to yield a 5-norbornene-2-allylacetate polymer (9.74 g: 95 % by weight based on the total weight of used monomers). The weight average molecular weight (Mw) of the polymer was 271,010 and Mw/Mn was 2.40.

Examples 18-20: Polymerization of 5-norbornene-2-allylacetate

5-norbornene-2-allylacetate was polymerized in the same manner as described in Example 17, except that the relative amounts of a toluene and a catalyst over a monomer were varied. The results were shown in Table 3.

Table 3

| | Monomer (mL) | Toluene/ Monomer (volumetric ratio) | Monomer / catalyst (molar ratio) | Yield | Mw | Mn | Mw/Mn |
|---|---|---|---|---|---|---|---|
| Example 17 | 10 | 3.0 | 15,000 | 9.74 g (95.0 %) | 271,000 | 113,000 | 2.40 |
| Example 18 | 10 | 2.0 | 15,000 | 9.70 g (94.6 %) | 319,000 | 124,000 | 2.57 |
| Example 19 | 10 | 3.0 | 10,000 | 10.08 g (98.4 %) | 287,000 | 114,000 | 2.51 |
| Example 20 | 10 | 2.0 | 10,000 | 10.04 g (98.0 %) | 307,000 | 120,000 | 2.57 |

Examples 21-23: Polymerization of 5-norbornene-2-allylacetate

5-norbornene-2-allylacetate (3 mL, 18.5 mmol) and toluene (11 mL) were charged onto a 250 mL Schlenk flask and a 1.23 mM of the catalysts solution in $CH_2Cl_2$ was prepared in a 2:1 ratio of $[(Cy)_3PH][(B(C_6F_5)_4]$ to $Pd(OAc)_2$. The catalyst solution was used in polymerization after aging for 24, 32, and 48 hours. The subsequent experimental procedure was carried out in the same manner as described in Example 1 and the result was shown in Table 4.

Table 4

| | Aging time (hr) | Yield (%) | Mw | Mn | Mw/Mn |
|---|---|---|---|---|---|
| Example 21 | 24 | 93.2 | 288,395 | 126,503 | 2.28 |
| Example 22 | 32 | 86.0 | 304,280 | 144,515 | 2.11 |
| Example 23 | 48 | 94.3 | 284,763 | 131,954 | 2.16 |

The catalyst solution containing $[(Cy)_3PH][(B(C_6F_5)_4)$ was observed to kept yellow color even after aging for 48 hours. As shown in Table 4, the polymerization yield was 90% or greater and the molecular weight was 250,000-290,000. The catalyst including $[(Cy)_3PH][(B(C_6F_5)_4)$ maintained good catalytic activity and good stability even after aging time.

Examples 24-25: Polymerization of 5-norbornene-2-allylacetate

5-norbornene-2-allylacetate (5 mL, 30.9 mmol) and toluene (18 mL) were charged into a 250 mL Schlenk flask. $Pd(OAc)_2$ (0.46 mg, 2.06 $\mu$ mol) and $[(Cy)_3PH][(B(C_6F_5)_4]$ (5.0 mg, 5.2 $\mu$ mol) were dissolved in $CH_2Cl_2$(1mL) and added to the monomer solution. The polymerization was carried out at 80 °C and 150 °C for 18 hours. The subsequent processes were carried out in the same manner as in Example 1 to obtain a 5-norbornene-2-allylacetate polymer and the results were shown in Table 5. For reference, the results of Example 1 were also added.

Table 5

| | Polymerization temperature (°C ) | Yield (%) | Mw | Mn | Mw/Mn |
|---|---|---|---|---|---|
| Example 1 | 90 | 92.2 | 250,071 | 92,619 | 2.70 |
| Example 24 | 80 | 83.0 | 312,300 | 138,200 | 2.26 |
| Example 25 | 150 | 85.0 | 145,000 | 62,000 | 2.34 |

Comparative Example 1-3 : Polymerization of 5-norbornene-2-allylacetate

A catalyst system including $Pd(OAc)_2$, dimethylanilium (tetrakispentafluorophenyl)borate ($[PhNMe_2H][B(C_6F_5)_4]$) and $P(Cy)_3$ was used. The molar ratio of $[PhNMe_2H][B(C_6F_5)_4]$ to $Pd(OAc)_2$ was 2:1 and the molar ratio of $P(Cy)_3$ to $Pd(OAc)_2$ was 1:1. These catalyst components were dissolved in $CH_2Cl_2$ to prepare a 1.23 mM orange catalyst solution. Polymerization was carried out in the same manner as described in Examples 21-23. The results were shown in Table 6.

Table 6

| | Aging time (hr) | Yield (%) | Mw | Mn | Mw/Mn |
|---|---|---|---|---|---|
| Comparative Example 1 | 24 | 81.7 | 289,461 | 135,137 | 2.14 |
| Comparative Example 2 | 32 | 32.7 | 300,643 | 145,393 | 2.07 |
| Comparative Example 3 | 48 | 2.60 | 233,495 | 116,726 | 2.00 |

The catalyst solution including $[PhNMe_2H][B(C_6F_5)_4]$ turned from orange to green in color after 10 minutes. When polymerization was carried out using the green catalyst solution, the polymerization yield was 80% after aging for 24 hours and was reduced to 10% or less after aging for 48 hours. As a result, catalyst solutions of Comparative Examples 1-3 including $[PhNMe_2H][B(C_6F_5)_4]$ are less stable than catalyst solutions of Examples 21-23 including $[(Cy)_3PH][(B(C_6F_5)_4)$.

Comparative Example 4: Polymerization of 5-norbornene-2-allylacetate

$[Li][B(C_6F_5)_4]$ (20.6 mg, 0.0030 mmol) and 5-norbornene-2-allylacetate (5.0 g, 30 mmol) were charged into a 250 mL Schlenk flask. A solution of $[(Allyl)PdCl]_2$ (0.55 mg, 0.0015 mmol) and $P(Cy)_3$ (0.84 mg, 0.0030 mmol) in toluene (0.1 mL) was added into the flask. Polymerization was carried out at 90 °C for 18 hours and the resulting solution was added into an excess amount of ethanol to precipitate polymeric materials. However, no polymer was obtained.

Comparative Example 5: Polymerization of 5-norbornene-2-carboxylic methylester

5-norbornene-2-carboxylic methylester ($MENB(NB-C(O)-O-CH_3)$ (5 mL, 34.4 mmol) and toluene (18 mL) were charged into a 250 mL Schlenk flask. A $CH_2Cl_2$ solution (1 mL) of $Pd(OAc)_2$ (0.772 mg, 3.44 μ mol) and $[HP(Cy)_3][(B(C_6F_5)_4)$ (6.61 mg, 6.88 μ mol) was added into the monomer solution via a syringe at 90 °C. Polymerization reaction was carried out at 90 °C for 18 hours. Thereafter, the resulting solution was added into an excess amount of ethanol to obtain white polymer precipitates. The precipitates were filtered through a glass filter to recover a polymer. The polymer was dried in a vacuum oven at 80 °C for 24 hours to obtain 5-norbornene-2-carboxylic methylester polymer (0.8 g: 15 % by weight based on the total weight of used monomers).

Comparative Example 6: Polymerization of 5-norbornene-2-carboxylic butylester

5-norbornene-2-carboxylic butylester ($MENB(NB-C(O)-O-CH_2CH_2CH_2CH_3)$ (5 mL, 34.4 mmol) and toluene (17 mL) were charged into a 250 mL Schlenk flask. A $CH_2Cl_2$ solution (1 mL) of $Pd(OAc)_2$ (0.56 mg, 2.51 μ mol) and $[HP(Cy)_3][(B(C_6F_5)_4)$ (4.82 mg, 5.02 μ mol) was added into the monomer solution via a syringe at 90 °C. Polymerization reaction was carried out at 90 °C for 18 hours. Thereafter, the resulting solution was added into an excess amount of ethanol. However, no polymer was obtained.

Comparative Example 7: Polymerization of 5-norbornene-2-allylacetate

5-norbornene-2-allylacetate (5 mL, 30.9 mmol) and toluene (18 mL) were charged into a 100 mL Schlenk flask. $Pd(OAc)_2$ (0.69 mg, 3.09 μ mol) and $[HP(Cy)_3][(B(C_6F_5)_4]$ (5.94 mg, 6.18 μ mol) were dissolved in $CH_2Cl_2$ (1 mL) and then $AlEt_3$(18.5□, 18.5 μ mol) was added there. Immediately the solution turns black in color. The black catalyst solution was added to the monomer solution. Polymerization was carried out at 90 °C for 18 hours. Thereafter, the resulting solution was added to ethanol. However, no polymer was obtained.

Comparative Example 8: Polymerization of 5-norbornene-2-allylacetate

5-norbornene-2-allylacetate (5 mL, 30.9 mmol) and toluene (18 mL) were charged into a 100 mL Schlenk flask. $Pd(OAc)_2$ (0.69 mg, 3.09 μ mol) and $[PhNMe_2H][B(C_6F_5)_4]$ (5.94 mg, 6.18 μ mol) as catalysts were dissolved in $CH_2Cl_2$ (1 mL), and then a colorless $(Cy)_3P \cdot AlEt_3$ complex solution including $Cy_3P$ (0.87 mg, 3.09 μ mol) and $AlEt_3$ (3.09 □ , 3.09 μ mol) was added there. Immediately the solution turns black in color. The black catalyst solution was added to the monomer solution. Polymerization was carried out at 90 °C for 18 hours. Thereafter, the resulting solution was added into excess ethanol to obtain white polymer precipitates. The precipitate was filtered through a glass filter and dried in a vacuum oven at 80 °C for 24 hours to obtain a polymer (0.5 g: 10 % by weight based on the total weight of used monomers).

Comparative Example 9 and 10: Polymerization of 5-norbornene-2-allylacetate

5-norbornene-2-allylacetate (5 mL, 30.9 mmol) and toluene (18 mL) were charged into a 250 mL Schlenk flask. $Pd(OAc)_2$ (0.46 mg, 2.06 μ mol) and $[(Cy)_3PH]$ $[(B(C_6F_5)_4]$ (5.0 mg, 5.2 μ mol) were dissolved in $CH_2Cl_2$ (1 mL) and added to the monomer solution. The polymerization was carried out at 50 °C and 170 °C for 18 hours. The subsequent processes were carried out in the same manner described as in Example 1. The results were shown in Table 7.

Table 7

| | Polymerization temperature (°C) | Yield (%) | Mw | Mn | Mw/Mn |
|---|---|---|---|---|---|
| Comparative Example 9 | 50 | 18.0 | 265,000 | 120,400 | 2.20 |
| Comparative Example 10 | 170 | 34.0 | 105,000 | 42,800 | 2.45 |

As can be seen in Table 7, as polymerization temperatures such as 50 and 170 °C are not within the range defined above, polymerization yields are considerably reduced. The reason for this is as described above.

Preparation of optical anisotropic film

Examples 26 and 27

Each of the polymers prepared in Examples 1 and 3 was mixed with a solvent to form a coating solution as shown in Table 8. The coating solutions were cast on a glass substrate using a knife coater or a bar coater, and then the substrate was dried at room temperature for 1 hour and further dried under a nitrogen atmosphere at 100 °C for 18 hours. The glass substrate was kept at -10 °C for 10 seconds and the film on the glass plate was peeled off to obtain a clear film having an uniform thickness. The thickness deviation of the film was less than 2%. The thickness and the light transmittance of the obtained film were shown in Table 8

Table 8

| | Composition of film solution | | Physical properties of film | |
|---|---|---|---|---|
| | Polymer (parts by weight) | Solvent (parts by weight) | Thickness (□) | Light transmittance (%) |
| Example 26 | Polymer prepared in Example 1 | THF 560 | 114 | 92 |
| Example 27 | Polymer prepared in Example 3 | $CH_2Cl_2$ 360 and TOLUENE 200 | 120 | 92 |

In Table 8, THF is tetrahydrofurane.

Measurement of optical anisotropy

Experimental Example 1 and 2

For clear films produced in Examples 26 and 27, a refractive index n was measured using an Abbe refractometer, an in-plane retardation value Re was measured using an automatic birefringence analyzer (available from Oji Scientific Instrument; KOBRA-21 ADH), and a retardation value $R_\theta$ was measured when the angle between incident light and the

film surface was 50° and a retardation value $R_{th}$ between the direction through the film thickness and the in-plane x-axis was calculated using Equation (2):

$$R_{th} = \frac{R_\theta \times \cos \theta_f}{\sin^2 \theta_f}$$

(2).

A refractive index difference ($n_x$-$n_y$) and a refractive index difference ($n_y$-$n_z$) were calculated by dividing $R_e$ and $R_{th}$ by the film thickness. ($n_x$-$n_y$), $R_\theta$, $R_{th}$ and ($n_y$-$n_z$) of each clear film were indicated in Table 9.

Table 9

| | n (refractive index) | $(n_x-n_y)x10^3$ | $R_{th}$ (nm/□) | $(n_y-n_z)x10^3$ |
|---|---|---|---|---|
| Experimental Example 1 | 1.52 | 0.008 | 2.32 | - |
| Experimental Example 2 | 1.50 | 0.009 | 2.13 | 2.13 |

When films were covered with a triacetate cellulose film having $n_y > n_z$, R values of all cyclic olefin films increased, which indicates that $R_{th}$ of a cyclic olefin film is produced due to a negative birefringence ($n > n_z$) in a direction through the film thickness.

According to the olefin polymerization method, deactivation of a catalyst due to a polar functional group of a monomer can be prevented, and thus a polyolefin having a high molecular weight can be prepared with a high yield, and the ratio of catalyst to monomer can be less than 1/5000 due to good activity of the catalyst, and thus removal of catalyst residues is not required.

**Industrial Applicability**

The present invention provides an addition-polymerization of cyclic olefins having polar functional groups which is able to meet a certain desired level in the aspect of polymerization yield, a molecular weight of a resultant polymer, and a molar ratio of a catalyst to monomers.

**Claims**

1. A method of producing cyclic olefin polymers having polar functional groups, the method comprising:

    preparing a catalyst mixture consisting of

    i) a procatalyst represented by formula (4) containing Palladium and a ligand containing hetero atoms bonded to the metal;
    ii) a cocatalyst represented by formula (5) including a salt compound which is capable of providing a phosphonium cation and an anion weakly coordinating to the metal of the procatalyst, the molar ratio of the cocatalyst to the procatalyst being 0.5-10:1; and

    addition-polymerizing cyclic olefin monomers having polar functional groups in the presence of an organic solvent and the catalyst mixture, at a temperature of 80-150°C, the molar ratio of the procatalyst to the total being 1:2,500 to 1:200,000:

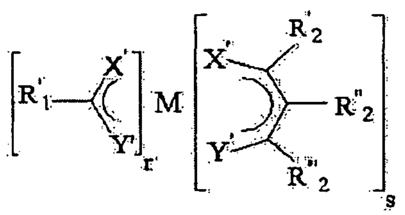

(4)

where each of X' and Y' is a hetero atom selected from S and O;
each of $R_1$', $R_2$', $R_2$'' and $R_2$''' is a linear or branched $C_{1-20}$ alkyl, alkenyl or vinyl; a $C_{5-12}$ cycloalkyl optionally substituted by a hydrocarbon; a $C_{6-40}$ aryl optionally substituted by a hydrocarbon; a $C_{7-15}$ aralkyl optionally substituted by a hydrocarbon; or a $C_{3-20}$ alkynyl;
M is palladium; and
each of r and s is an integer from 0 to 2 and r+s = 2, and

$[H\text{-}P(R_4)_3]$ [Ani] (5)

where $R_4$ is a hydrogen; a linear or branched $C_{1-20}$ alkyl, alkoxy, allyl, alkenyl or vinyl; an optionally substituted $C_{3-12}$ cycloalkyl; an optionally substituted $C_{6-40}$ aryl; an optionally substituted $C_{7-15}$ aralkyl; or a $C_{3-20}$ alkynyl, in which each substituent is a halogen or a $C_{1-20}$ haloalkyl; and
[Ani] is an anion capable of weakly coordinating to palladium of the procatalyst represented by formula (4) and is selected from the group consisting of borate, aluminate, $[SbF_6]$ -, $[PF_6]$ -, $[AsF_6]$ -, perfluoroacetate ($[CF_3CO_2]$-), perfluoropropionate($[C_2F_5CO_2]$-), perfluorobutyrate ($[CF_3CF_2CF_2CO_2]$-) , perchlorate($[ClO_4]$-), p-toluenesulfonate ($[p\text{-}CH_3C_6H_4SO_3]$-), $[SO_3CF_3]$-, boratabenzene, and carborane optionally substituted with a halogen.

2. The method of claim 1, wherein the borate or aluminate of formula (5) is an anion represented by formula (2a) or (2b):

$[M'(R_6)_4]$ (2a),

$[M'(OR_6)_4]$ (2b)

where M' is B or Al;
$R_6$ is each independently a halogen, a linear or branched $C_{1-20}$ alkyl or alkenyl optionally substituted by a halogen, a $C_{3-12}$ cycloalkyl optionally substituted by a halogen, a $C_{6-40}$ aryl optionally substituted by a hydrocarbon, a $C_{6-40}$ aryl optionally substituted by a linear or branched $C_{3-20}$ trialkylsiloxy or a linear or branched $C_{18-48}$ triarylsiloxy, or a $C_{7-15}$ aralkyl optionally substituted by a halogen.

3. The method of claim 1, wherein the cyclic olefin monomer is a compound represented by formula (3):

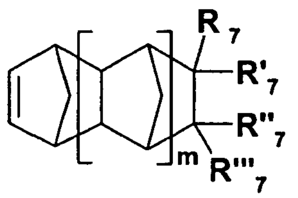

(3)

where m is an integer from 0 to 4;
at least one of $R_7$, $R_7$', $R_7$'' and $R_7$''' is a polar functional group and the others are nonpolar functional groups ;
$R_7$, $R_7$', $R_7$'' and $R_7$''' can be bonded together to form a saturated or unsaturated $C_{4-12}$ cyclic group or a $C_{6-24}$ aromatic ring;
the nonpolar functional group is a hydrogen; a halogen; a linear or branched $C_{1-20}$ alkyl, haloalkyl, alkenyl or haloalkenyl; a linear or branched $C_{3-20}$ alkynyl or haloalkynyl; a $C_{3-12}$ cycloalkyl optionally substituted by an alkyl, an alkenyl, an alkynyl, a halogen, a haloalkyl, a haloalkenyl or haloalkynyl; a $C_{6-40}$ aryl optionally substituted

by an alkyl, an alkenyl, an alkynyl, a halogen, a haloalkyl, a haloalkenyl or haloalkynyl; or a $C_{7-15}$ aralkyl optionally substituted by an alkyl, an alkenyl, an alkynyl, a halogen, a haloalkyl, a haloalkenyl or haloalkynyl;
the polar functional group is a non-hydrocarbonaceous polar group having at least one O, N, P, S, Si or B and is $-R^8OR^9$, $-OR^9$, $-OC(O)OR^9$, $-R^8OC(O)OR^9$, $-C(O)R^9$, $-R^8C(O)OR^9$, $-C(O)OR^9$, $-R^8C(O)R^9$, $-OC(O)R^9$, $-R^8OC(O)R^9$, $-(R^8O)_k-OR^9$, $-(OR^8)_k-OR^9$, $-C(O)-O-C(O)R^9$, $-R^8C(O)-O-C(O)R^9$, $-SR^9$, $-R^8SR^9$, $-SSR^8$, $-R^8SSR^9$, $-S(=O)R^9$, $-R^8S(=O)R^9$, $-R^8C(=S)R^9$, $-R^8C(=S)SR^9$, $-R^8SO_3R^9$, $-SO_3R^9$, $-R^8N=C=S$, -NCO, $R^8$-NCO, -CN, $-R^8CN$, $-NNC(=S)R^9$, $-R^8NNC(=S)R^9$. $-NO_2$, $-R^8NO_2$,

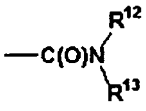 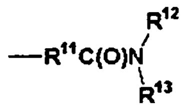 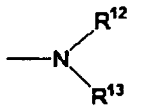 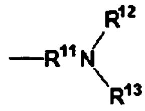

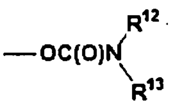 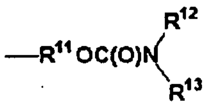 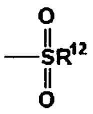 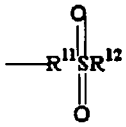 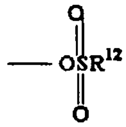 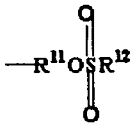

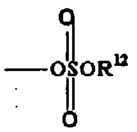 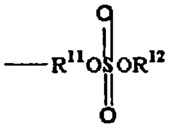 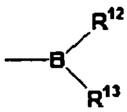 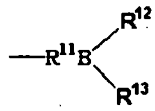 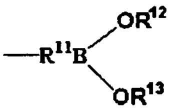

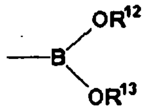 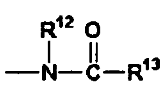 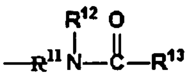 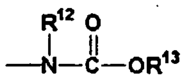 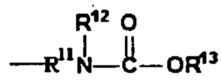

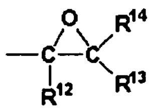 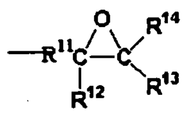 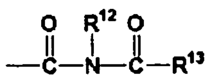 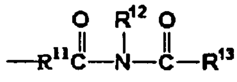

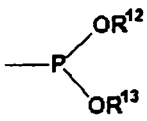 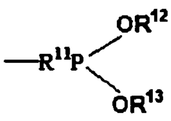 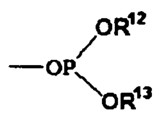 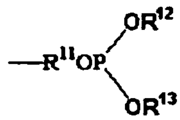

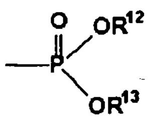 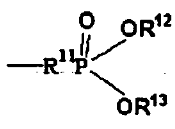 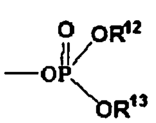 or 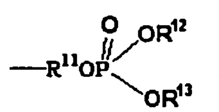

in which each of $R^8$ and $R^{11}$ is a linear or branched $C_{1-20}$ alkylene, haloalkylene, alkenylene or haloalkenylene; a linear or branched $C_{3-20}$ alkynylene or haloalkynylene; a $C_{3-12}$ cycloalkylene optionally substituted by an alkyl, an alkenyl, an alkynyl, a halogen, a haloalkyl, a haloalkenyl or haloalkynyl; a $C_{6-40}$ arylene optionally substituted by an alkyl, an alkenyl, an alkynyl, a halogen, a haloalkyl, a haloalkenyl or haloalkynyl; or a $C_{7-15}$ aralkylene optionally substituted by an alkyl, an alkenyl, an alkynyl, a halogen, a haloalkyl, a haloalkenyl or haloalkynyl;
each of $R^9$, $R^{10}$, $R^{12}$ and $R^{13}$ is a hydrogen; a halogen; a linear or branched $C_{1-20}$ alkyl, haloalkyl, alkenyl or haloalkenyl; a linear or branched $C_{3-20}$ alkynyl or haloalkynyl; a $C_{3-12}$ cycloalkyl optionally substituted by an alkyl, an alkenyl, an alkynyl, a halogen, a haloalkyl, a haloalkenyl or haloalkynyl; a $C_{6-40}$ aryl optionally substituted by an alkyl, an alkenyl, an alkynyl, a halogen, a haloalkyl, a haloalkenyl or haloalkynyl; a $C_{7-15}$

aralkyl optionally substituted by an alkyl, an alkenyl, an alkynyl, a halogen, a haloalkyl, a haloalkenyl or haloalkynyl; or an alkoxy, an haloalkoxy, a carbonyloxy or a halocarbonyloxy; and
k is an integer from 1 to 10.

4. The method of claim 1, wherein the procatalyst represented by formula (4) is a palladium compound represented by formula (4a) ;

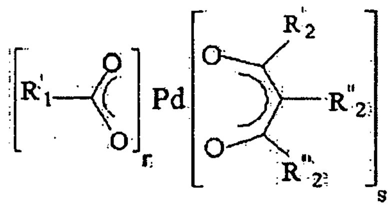

(4a)

where each of $R_1'$, $R_2'$, $R_2''$ and $R_2'''$ is a linear or branched $C_{1-20}$ alkyl, alkenyl or vinyl; a $C_{5-12}$ cycloalkyl optionally substituted by a hydrocarbon; a $C_{6-40}$ aryl optionally substituted by a hydrocarbon; a $C_{7-15}$ aralkyl optionally substituted by a hydrocarbon; or a $C_{3-20}$ alkynyl; and
each of r and s is an integer from 0 to 2 and r+s = 2.

5. The method of claim 1, wherein the catalyst mixture is supported on a inorganic support.

6. The method of claim 5, wherein the inorganic support is at least one selected from the group consisting of silica, titania, silica/chromia, silica/chromia/titania, silica/alumina, aluminum phosphate gel, silanized silica, silica hydrogel, montmorillonite clay and zeolite.

7. The method of claim 1, wherein an organic solvent used to dissolve the catalyst mixture is at least one solvent selected from the group consisting of dichloromethane, dichloroethane, toluene, chlorobenzene and a mixture thereof.

8. The method of claim 1, wherein a total amount of the organic solvent is 50-800% based on the weight of the total monomer in the monomer solution.

9. The method of claim 1, wherein the catalyst mixture comprises a metal catalyst complex composed of the procatalyst and the cocatalyst.

10. The method of claim 1, wherein the catalyst mixture is added in a solid phase to the monomer solution.

11. The method of claim 1, wherein the monomer solution further comprises a cyclic olefin compound having no polar functional group.

12. The method of claim 1, wherein the cyclic olefin polymers having polar functional groups comprise a cyclic olefin homopolymer, a copolymer of cyclic olefin monomers having different polar functional groups or a copolymer of a cyclic olefin monomer having a polar functional group and a cyclic olefin monomer having no polar functional group.

13. The method of claim 1, wherein a weight average molecular weight $M_w$ of the cyclic olefin polymer having a polar functional group is 10,000-1,000,000.

14. The method of claim 1, wherein the monomer solution further comprises a linear or branched $C_{1-20}$ olefin.

**Patentansprüche**

1. Verfahren zur Erzeugung von cyclischen Olefinpolymeren mit polaren funktionellen Gruppen, wobei das Verfahren umfasst:

Herstellung einer Katalysatormischung, bestehend aus:

(i) einem Prokatalysator, dargestellt durch die Formel (4), umfassend Palladium und einen Liganden, der Heteroatome enthält, die an das Metall gebunden sind;
(ii) einem Cokatalysator, dargestellt durch die Formel (5), umfassend eine Salzverbindung, die ein Phosphoniumkation und ein Anion ergeben kann, das schwach an das Metall des Prokatalysators koordiniert ist, wobei das molare Verhältnis des Cokatalysators zum Prokatalysator 0,5-10:1 ist; und

Additionspolymerisierung von cyclischen Olefinmonomeren mit polaren funktionellen Gruppen in der Gegenwart eines organischen Lösungsmittels und der Katalysatormischung bei einer Temperatur von 80-150°C, wobei das molare Verhältnis des Prokatalysators zum gesamten Monomer 1:2500 bis 1:200000 ist:

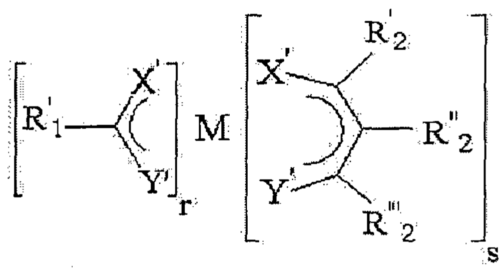
(4)

worin X' und Y' jeweils ein Heteroatom sind, ausgewählt aus S und O;
$R_1'$, $R_2'$, $R_2''$ und $R_2'''$ lineares oder verzweigtes $C_{1-20}$-Alkyl, Alkenyl oder Vinyl; $C_{5-12}$-Cycloalkyl, wahlweise substituiert durch einen Kohlenwasserstoff; $C_{6-40}$-Aryl, wahlweise substituiert durch einen Kohlenwasserstoff; $C_{7-15}$-Aralkyl, wahlweise substituiert durch einen Kohlenwasserstoff; oder $C_{3-20}$-Alkinyl sind;
M Palladium ist; und
r und s jeweils eine ganze Zahl von 0 bis 2 sind und r+s 2 ist, und

$[H\text{-}P(R_4)_3]$ [Ani] (5)

worin $R_4$ Wasserstoff; lineares oder verzweigtes $C_{1-20}$-Alkyl, Alkoxy, Allyl, Alkenyl oder Vinyl; wahlweise substituiertes $C_{3-12}$-Cycloalkyl; wahlweise substituiertes $C_{6-40}$-Aryl; wahlweise substituiertes $C_{7-15}$-Aralkyl; oder $C_{3-20}$-Alkinyl ist, worin jeder Substituent ein Halogen oder $C_{1-20}$-Haloalkyl ist; und
[Ani] ein Anion ist, das in der Lage ist, schwach an Palladium des Prokatalysators mit der Formel (4) zu koordinieren und ausgewählt ist aus der Gruppe bestehend aus Borat, Aluminat, $[SbF_6]^-$, $[PF_6]^-$, $[AsF_6]^-$, Perfluoracetat ($[CF_3CO_2]^-$), Perfluorpropionat ($[C_2F_5CO_2]^-$), Perfluorbutyrat ($[CF_3CF_2CF_2CO_2]^-$), Perchlorat ($[ClO_4]^-$), p-Toluolsulfonat ($[p\text{-}CH_3C_6H_4SO_3]^-$), $[SO_3CF_3]^-$, Boratabenzol und Carboran, wahlweise substituiert mit einem Halogen.

**2.** Verfahren nach Anspruch 1, worin das Borat oder Aluminat der Formel (5) ein Anion mit der Formel (2a) oder (2b) ist:

$[M'(R_6)_4]$ (2a),

$[M'(OR_6)_4]$ (2b)

worin M' B oder Al ist;
$R_6$ jeweils unabhängig ein Halogen, lineares oder verzweigtes $C_{1-20}$-Alkyl oder Alkenyl, wahlweise substituiert durch ein Halogen, $C_{3-12}$-Cycloalkyl, wahlweise substituiert durch ein Halogen, $C_{6-40}$-Aryl, wahlweise substituiert durch einen Kohlenwasserstoff, $C_{6-40}$-Aryl, wahlweise substituiert durch lineares oder verzweigtes $C_{3-20}$-Trialkylsiloxy oder linears oder verzweigtes $C_{18-48}$-Triarylsiloxy, oder $C_{7-15}$-Aralkyl, wahlweise substituiert durch ein Halogen, ist.

**3.** Verfahren nach Anspruch 1, worin das cyclische Olefinmonomer eine Verbindung mit der Formel (3) ist:

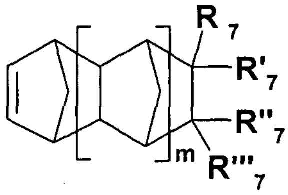

(3)

worin m eine ganze Zahl von 0 bis 4 ist;
zumindest eines von $R_7$, $R_7'$, $R_7''$ und $R_7'''$ eine polare funktionelle Gruppe ist und die anderen nichtpolare funktionelle Gruppen sind;
$R_7$, $R_7'$, $R_7''$ und $R_7'''$ aneinander gebunden sein können, zur Bildung einer gesättigten oder ungesättigten cyclischen $C_{4-12}$-Gruppe oder eines $C_{6-24}$-aromatischen Rings;
die nichtpolare funktionelle Gruppe ein Wasserstoff, Halogen, lineares oder verzweigtes $C_{1-20}$-Alkyl, Haloalkyl, Alkenyl oder Haloalkenyl; lineares oder verzweigtes $C_{3-20}$-Alkinyl oder Haloalkinyl; $C_{3-12}$-Cycloalkyl, wahlweise substituiert durch Alkyl, Alkenyl, Alkinyl, Halogen, Haloalkyl, Haloalkenyl oder Haloalkinyl; $C_{6-40}$-Aryl, wahlweise substituiert durch Alkyl, Alkenyl, Alkinyl, Halogen, Haloalkyl, Haloalkenyl oder Haloalkinyl; oder $C_{7-15}$-Aralkyl ist, wahlweise substituiert durch Alkyl, Alkenyl, Alkinyl, Halogen, Haloalkyl, Haloalkenyl oder Haloalkinyl;
die polare funktionale Gruppe eine polare Nicht-Kohlenwasserstoffgruppe mit zumindest einem O, N, P, S, Si oder B ist und $-R^8OR^9$, $-OR^9$, $-OC(O)OR^9$, $-R^8OC(O)OR^9$, $-C(O)R^9$, $-R^8C(O)OR^9$, $-C(O)OR^9$, $-R^8C(O)R^9$, $-OC(O)R^9$, $-R^8OC(O)R^9$, $-(R^8O)_k-OR^9$, $-(OR^8)_k-OR^9$, $-C(O)-O-C(O)R^9$, $-R^8C(O)-O-C(O)R^9$, $-SR^9$, $-R^8SR^9$, $-SSR^8$, $-R^8SSR^9$, $-S(=O)R^9$, $-R^8S(=O)R^9$, $-R^8C(=S)R^9$, $-R^8C(=S)SR^9$, $-R^8SO_3R^9$, $-SO_3R^9$, $-R^8N=C=S$, -NCO, $R^8$-NCO, -CN, $-R^8CN$, $-NNC(=S)R^9$, $-R^8NNC(=S)R^9$, $-NO_2$, $-R^8NO_2$,

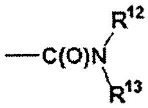
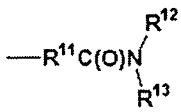
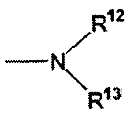
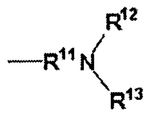

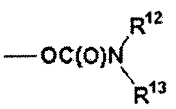
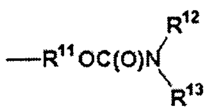
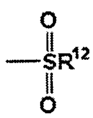
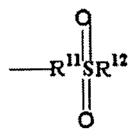
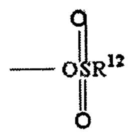
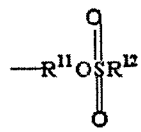

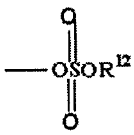
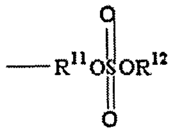
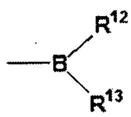
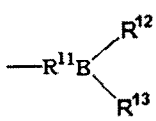
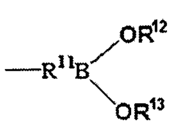

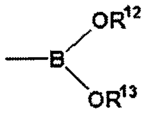
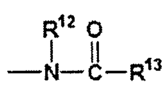
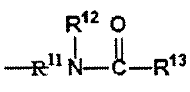
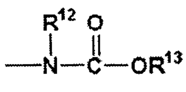
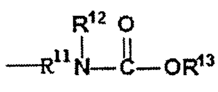

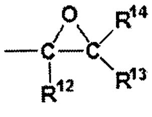
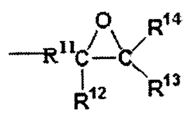
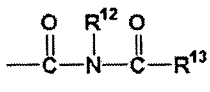
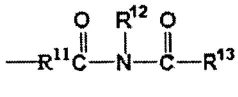

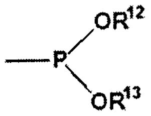 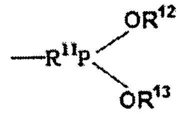 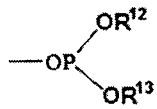 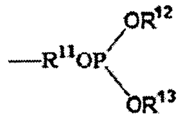

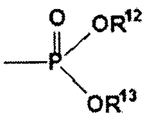 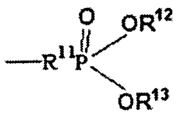 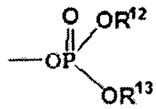 oder 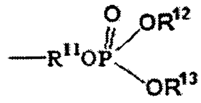

ist,

worin $R^8$ und $R^{11}$ jeweils lineares oder verzweigtes $C_{1-20}$-Alkylen, Haloalkylen, Alkenylen oder Haloalkenylen ist; lineares oder verzweigtes $C_{3-20}$-Alkinylen oder Haloalkinylen; $C_{3-12}$-Cycloalkylen, wahlweise substituiert durch Alkyl, Alkenyl, Alkinyl, Halogen, Haloalkyl, Haloalkenyl oder Haloalkinyl; $C_{6-40}$-Arylen, wahlweise substitutiert durch Alkyl, Alkenyl, Alkinyl, Halogen, Haloalkyl, Haloalkenyl oder Haloalkinyl; oder $C_{7-15}$-Aralkylen, wahlweise substituiert durch Alkyl, Alkenyl, Alkinyl, Halogen, Haloalkyl, Haloalkenyl oder Haloalkinyl;

$R^9$, $R^{10}$, $R^{12}$ und $R^{13}$ jeweils Wasserstoff, Halogen, lineares oder verzweigtes $C_{1-20}$-Alkyl, Haloalkyl, Alkenyl oder Haloalkenyl; lineares oder verzweigtes $C_{3-20}$-Alkinyl oder Haloalkinyl; $C_{3-12}$-Cycloalkyl, wahlweise substituiert durch Alkyl, Alkenyl, Alkinyl, Halogen, Haloalkyl, Haloalkenyl oder Haloalkinyl; $C_{6-40}$-Aryl, wahlweise substituiert durch Alkyl, Alkenyl, Alkinyl, Halogen, Haloalkyl, Haloalkenyl oder Haloalkinyl; $C_{7-15}$-Aralkyl, wahlweise substituiert durch Alkyl, Alkenyl, Alkinyl, Halogen, Haloalkyl, Haloalkenyl oder Haloalkinyl; oder Alkoxy, Haloalkoxy, Carbonyloxy oder Halocarbonyloxy sind; und

k eine ganze Zahl von 1 bis 10 ist.

**4.** Verfahren nach Anspruch 1, worin der Prokatalysator, dargestellt durch die Formel (4), eine Paladiumverbindung ist, dargestellt durch die Formel (4a) :

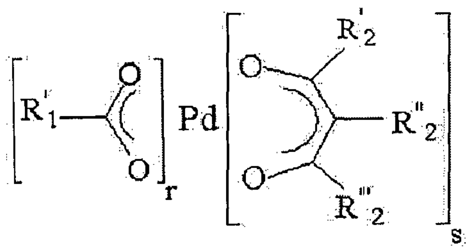

(4a)

worin $R_1'$, $R_2'$, $R_2''$ und $R_2'''$ jeweils lineares oder verzweigtes $C_{1-20}$-Alkyl, Alkenyl oder Vinyl; $C_{5-12}$-Cycloalkyl, wahlweise substituiert durch einen Kohlenwasserstoff; $C_{6-40}$-Aryl, wahlweise substituiert durch einen Kohlenwasserstoff; $C_{7-15}$-Aralkyl, wahlweise substituiert durch einen Kohlenwasserstoff; oder $C_{3-20}$-Alkinyl sind; und jedes von r und s eine ganze Zahl von 0 bis 2 ist und r+s = 2 ist.

**5.** Verfahren nach Anspruch 1, worin die Katalysatormischung auf einem anorganischen Träger getragen ist.

**6.** Verfahren nach Anspruch 5, worin der anorganische Träger zumindest einer ist, ausgewählt aus der Gruppe bestehend aus Silica, Titandioxid, Silica/Chromoxid, Silica/Chromoxid/Titandioxid, Silica/Aluminiumoxid, Aluminiumphosphat-Gel, silanisiertem Silica, Silicahydrogel, Montmorillonitlehm und Zeolith.

**7.** Verfahren nach Anspruch 1, worin ein organisches Lösungsmittel, das zur Auflösung der Katalysatormischung verwendet wird, zumindest ein Lösungsmittel ist, ausgewählt aus der Gruppe bestehend aus Dichlormethan, Dichlorethan, Toluol, Chlorbenzol und einer Mischung davon.

**8.** Verfahren nach Anspruch 1, worin eine Gesamtmenge des organischen Lösungsmittels 50-800% ist, bezogen auf

das Gewicht des gesamten Monomers in der Monomerlösung.

**9.** Verfahren nach Anspruch 1, worin die Katalysatormischung einen Metallkatalysatorkomplex enthält, der sich aus dem Prokatalysator und dem Cokatalysator zusammensetzt.

**10.** Verfahren nach Anspruch 1, worin die Katalysatormischung in einer Feststoffphase zu der Monomerlösung gegeben wird.

**11.** Verfahren nach Anspruch 1, worin die Monomerlösung weiterhin eine cyclische Olefinverbindung ohne polare funktionelle Gruppe umfasst.

**12.** Verfahren nach Anspruch 1, worin die cyclischen Olefinpolymere mit polaren funktionellen Gruppen ein cyclisches Olefinhomopolymer, ein Copolymer aus cyclischen Olefinmonomeren mit unterschiedlichen polaren funktionellen Gruppen oder ein Copolymer aus einem cyclischen Olefinmonomer mit einer polaren funktionellen Gruppe und einem cyclischen Olefinmonomer ohne polare funktionelle Gruppe umfassen.

**13.** Verfahren nach Anspruch 1, worin ein Molekulargewicht im Gewichtsmittel $M_w$ des cyclischen Olefinpolymers mit einer polaren funktionellen Gruppe 10000-1000000 ist.

**14.** Verfahren nach Anspruch 1, worin die Monomerlösung weiterhin ein lineares oder verzweigtes $C_{1-20}$-Olefin umfasst.

## Revendications

**1.** Procédé de production de polymères d'oléfine cycliques ayant des groupes fonctionnels polaires, le procédé comprenant :

la préparation d'un mélange de catalyseurs consistant en

i) un procatalyseur représenté par la formule (4) contenant du Palladium et un ligand contenant des hétéroatomes liés au métal ;
ii) un cocatalyseur représenté par la formule (5) incluant un composé de sel qui est capable de fournir un cation de phosphonium et un anion se coordonnant faiblement au métal du procatalyseur, le rapport molaire du cocatalyseur sur le procatalyseur étant de 0,5 - 10:1 ; et

des monomères d'oléfine cycliques à polymérisation par addition ayant des groupes fonctionnels polaires en présence d'un solvant organique et du mélange de catalyseurs, à une température de 80 - 150 °C, le rapport molaire du procatalyseur sur le monomère total étant de 1:2500 à 1:200000 :

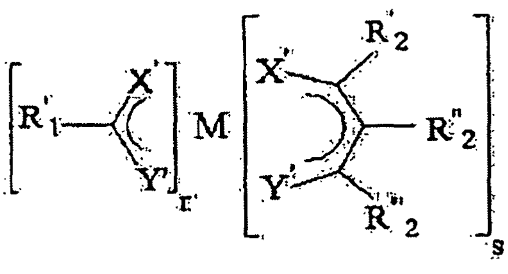

(4)

où chacun de X' et Y' est un hétéroatome sélectionné à partir de S et O ;
chacun de $R_1'$, $R_2'$, $R_2''$ et $R_2'''$ est un alkyle, alcényle ou vinyle en $C_{1-20}$ linéaire ou ramifié ; un cycloalkyle en $C_{5-12}$ substitué optionnellement par un hydrocarbure ; un aryle en $C_{6-40}$ substitué optionnellement par un hydrocarbure ; un aralkyle en $C_{7-15}$ substitué optionnellement par un hydrocarbure ; ou un alcynyle en $C_{3-20}$ ;
M est du palladium ; et
chacun de r et s est un entier de 0 à 2 et r+s = 2,

et

$[H-P(R_4)_3]$ [Ani] (5)

où R4 est un hydrogène ; un alkyle, alcoxy, allyle, alcényle ou vinyle en $C_{1-20}$ linéaire ou ramifié ; un cycloalkyle en $C_{3-12}$ substitué optionnellement; un aryle en $C_{6-40}$ substitué optionnellement; un aralkyle en $C_{7-15}$ substitué optionnellement; ou un alcynyle en $C_{3-20}$, dans lesquels chaque substituant est un halogène ou un haloalkyle en $C_{1-20}$ ; et

[Ani] est un anion capable de faiblement se coordonner à du palladium du procatalyseur représenté par la formule (4) et est sélectionné à partir du groupe constitué de borate, d'aluminate, de $[SbF_6]^-$, de $[PF_6]^-$, de $[AsF_6]^-$, de perfluoroacétate ($[CF_3CO_2]^-$), de perfluoropropionate ($[C_2F_5CO_2]^-$), de perfluorobutyrate ($[CF_3CF_2CF_2CO_2]^-$), de perchlorate ($[ClO_4]^-$), de p-toluènesulfonate ($[p-CH_3C_6H_4SO_3]^-$), de $[SO_3CF_3]^-$, de boratabenzène, et de carborane substitué optionnellement par un halogène.

2. Procédé selon la revendication 1, dans lequel le borate ou l'aluminate de la formule (5) est un anion représenté par la formule (2a) ou (2b) :

$[M'(R_6)_4]$ (2a),

$[M'(OR_6)_4]$ (2b)

où M' est B ou Al ;

$R_6$ est chacun indépendamment un halogène, un alkyle ou un alcényle en $C_{1-20}$ linéaire ou ramifié substitué optionnellement par un halogène, un cycloalkyle en $C_{3-12}$ substitué optionnellement par un halogène, un aryle en $C_{6-40}$ substitué optionnellement par un hydrocarbure, un aryle en $C_{6-40}$ substitué optionnellement par un trialkylsiloxy en $C_{3-20}$ linéaire ou ramifié ou un triarylsiloxy en $C_{18-48}$ linéaire ou ramifié, ou un aralkyle en $C_{7-15}$ substitué optionnellement par un halogène.

3. Procédé selon la revendication 1, dans lequel le monomère d'oléfine cyclique est un composé représenté par la formule (3) :

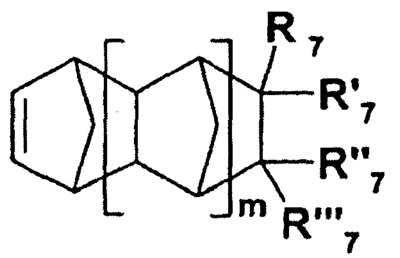

(3)

où m est un entier de 0 à 4 ;

au moins un de $R_7$, $R_7'$, $R_7''$ et $R_7'''$ est un groupe fonctionnel polaire et les autres sont des groupes fonctionnels non polaires ;

$R_7$, $R_7'$, $R_7''$ et $R_7'''$ peuvent être liés ensemble pour former un groupe cyclique en $C_{4-12}$ saturé ou non saturé ou un cycle aromatique en $C_{6-24}$ ;

le groupe fonctionnel non polaire est un hydrogène ; un halogène ; un alkyle, haloalkyle, alcényle ou haloalcényle en $C_{1-20}$ linéaire ou ramifié ; un alcynyle ou haloalcynyle en $C_{3-20}$ linéaire ou ramifié ; un cycloalkyle en $C_{3-12}$ substitué optionnellement par un alkyle, un alcényle, un alcynyle, un halogène, un haloalkyle, un haloalcényle ou un haloalcynyle ; un aryle en $C_{6-40}$ substitué optionnellement par un alkyle, un alcényle, un alcynyle, un halogène, un halooalkyle, un haloalcényle ou un haloalcynyle ; ou un aralkyle en $C_{7-15}$ substitué optionnellement par un alkyle, un alcényle, un alcynyle, un halogène, un halooalkyle, un haloalcényle ou un haloalcynyle ;

le groupe fonctionnel polaire est un groupe polaire non hydrocarboné ayant au moins un O, N, P, S, Si ou B et est $-R^8OR^9$, $-OR^9$, $-OC(O)OR^9$, $-R^8OC(O)OR^9$, $-C(O)R^9$, $-R^8C(O)OR^9$, $-C(O)OR^9$, $-R^8C(O)R^9$, $-OC(O)R^9$, $-R^8OC(O)R^9$, $-(R^8O)_k-OR^9$, $-(OR^8)_k-OR^9$, $-C(O)-O-C(O)R^9$, $-R^8C(O)-O-C(O)R^9$, $-SR^9$, $-R^8SR^9$, $-SSR^8$, $-R^8SSR^9$, $-S(=O)R^9$, $-R^8S(=O)R^9$, $-R^8C(=S)R^9$, $-R^8C(=S)SR^9$, $-R^8SO_3R^9$, $-SO_3R^9$, $-R^8N=C=S$, $-NCO$, $R^8-NCO$,

-CN, $-R^8CN$, $-NNC(=S)R^9$, $-R^8NNC(=S)R^9$, $-NO_2$, $-R^8NO_2$,

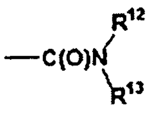 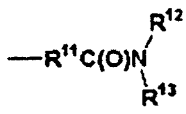 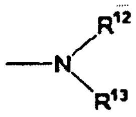 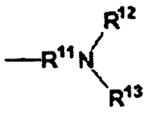

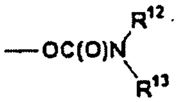 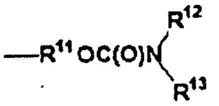 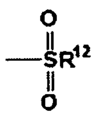 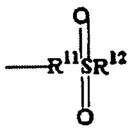 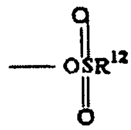 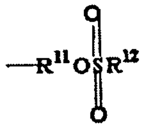

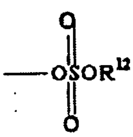 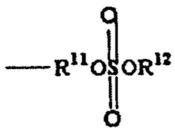 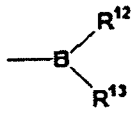 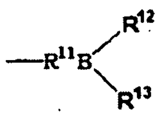 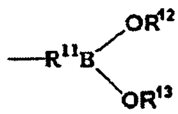

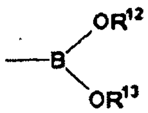 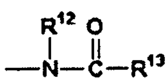 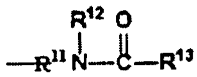 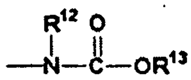 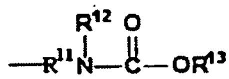

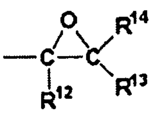 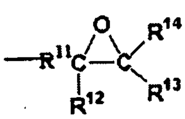 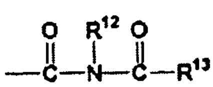 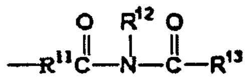

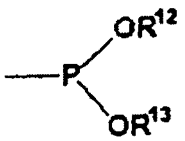 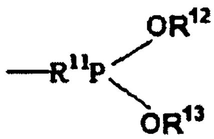 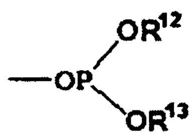 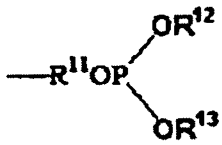

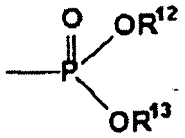 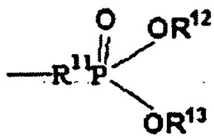 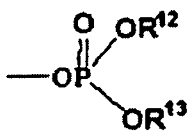 or 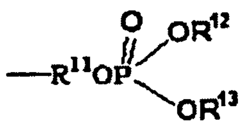

ou

dans lesquels chacun de $R^8$ et $R^{11}$ est un alkylène, haloalkylène, alcénylène ou haloalcénylène en $C_{1-20}$ linéaire ou ramifié ; un alkynylène ou haloalkynylène en $C_{3-20}$ linéaire ou ramifié ; un cycloalkylène en $C_{3-12}$ substitué optionnellement par un alkyle, un alcényle, un alcynyle, un halogène, un haloalkyle, un haloalcényle ou un haloalcynyle ; un arylène en $C_{6-40}$ substitué optionnellement par un alkyle, un alcényle, un alcynyle, un halogène, un haloalkyle, un haloalcényle ou un haloalcynyle ; ou un aralkylène en $C_{7-15}$ substitué optionnellement par un alkyle, un alcényle, un alcynyle, un halogène, un haloalkyle, un haloalcényle ou un haloalcynyle ;

chacun de $R^9$, $R^{10}$, $R^{12}$ et $R^{13}$ est un hydrogène ; un halogène ; un alkyle, haloalkyle, alcényle ou haloalcényle en $C_{1-20}$ linéaire ou ramifié ; un alcynyle ou haloalcynyle en $C_{3-20}$ linéaire ou ramifié ; un cycloalkyle en $C_{3-12}$ substitué optionnellement par un alkyle, un alcényle, un alcynyle, un halogène, un haloalkyle, un haloalcényle ou un haloalcynyle ; un aryle en $C_{6-40}$ substitué optionnellement par un alkyle, un alcényle, un alcynyle, un halogène, un haloalkyle, un haloalcényle ou un haloalcynyle ; un aralkyle en $C_{7-15}$ substitué optionnellement par un alkyle, un alcényle, un alcynyle, un halogène, un haloalkyle, un haloalcényle ou un

haloalcynyle ; ou un alcoxy, un haloalcoxy, un carbonyloxy ou un halocarbonyloxy ; et
k est un entier de 1 à 10.

4. Procédé selon la revendication 1, dans lequel le procatalyseur représenté par la formule (4) est un composé de palladium représenté par la formule (4a) ;

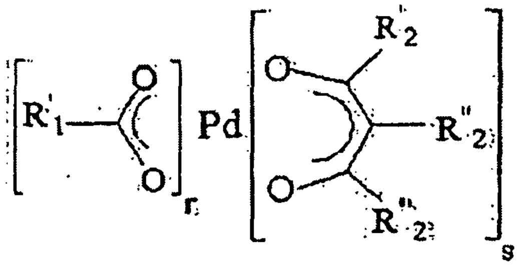

(4a)

où chacun de $R_1$', $R_2$', $R_2$'' et $R_2$''' est un alkyle, alcényle ou vinyle en $C_{1-20}$ linéaire ou ramifié ; un cycloalkyle en $C_{5-12}$ substitué optionnellement par un hydrocarbure ; un aryle en $C_{6-40}$ substitué optionnellement par un hydrocarbure ; un aralkyle en $C_{7-15}$ substitué optionnellement par un hydrocarbure ; ou un alcynyle en $C_{3-20}$ ; et chacun de r et s est un entier de 0 à 2 et r+s = 2.

5. Procédé selon la revendication 1, dans lequel le mélange de catalyseurs est supporté sur un support inorganique.

6. Procédé selon la revendication 5, dans lequel le support inorganique est au moins un sélectionné à partir du groupe constitué de silice, de dioxyde de titane, de silice/oxyde de chrome, de silice/oxyde de chrome/dioxyde de titane, de silice/alumine, de gel de phosphate d'aluminium, de silice silanisée, d'hydrogel de silice, d'argile de montmorillonite et de zéolite.

7. Procédé selon la revendication 1, dans lequel un solvant organique utilisé pour dissoudre le mélange de catalyseurs est au moins un solvant sélectionné à partir du groupe constitué de dichlorométhane, d'éthane dichlorique, de toluène, de chlorobenzène et d'un mélange de ceux-ci.

8. Procédé selon la revendication 1, dans lequel une quantité totale du solvant organique est de 50 - 800 % sur base du poids du monomère total dans la solution de monomère.

9. Procédé selon la revendication 1, dans lequel le mélange de catalyseurs comprend un complexe de catalyseur métallique composé du procatalyseur et du cocatalyseur.

10. Procédé selon la revendication 1, dans lequel le mélange de catalyseurs est ajouté en une phase solide à la solution de monomère.

11. Procédé selon la revendication 1, dans lequel la solution de monomère comprend en outre un composé d'oléfine cyclique n'ayant aucun groupe fonctionnel polaire.

12. Procédé selon la revendication 1, dans lequel les polymères d'oléfine cycliques ayant des groupes fonctionnels polaires comprennent un homopolymère d'oléfine cyclique, un copolymère de monomères d'oléfine cycliques ayant différents groupes fonctionnels polaires ou un copolymère d'un monomère d'oléfine cyclique ayant un groupe fonctionnel polaire et un monomère d'oléfine cyclique n'ayant aucun groupe fonctionnel polaire.

13. Procédé selon la revendication 1, dans lequel un poids moléculaire moyen pondéral Mw du polymère d'oléfine cyclique ayant un groupe fonctionnel polaire est de 10 000 - 1 000 000.

14. Procédé selon la revendication 1, dans lequel la solution de monomère comprend en outre une oléfine $C_{1-20}$ linéaire ou ramifiée.

FIG. 1

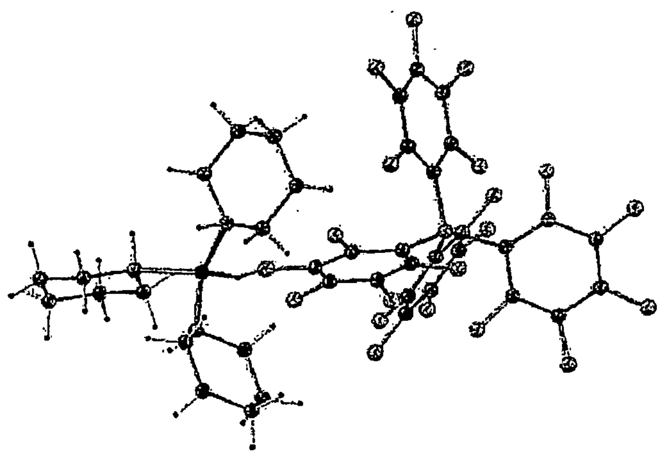

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- DE 109224, Koinzer, P.
- US 3330815 A
- US 5705503 A
- US 6455650 B, Lipian


### Non-patent literature cited in the description


- **IVIN, K. J. ; O'DONNEL, J. H. ; ROONEY, J. J. ; STEWARD, C. D.** *Makromol. Chem.,* 1979, vol. 180
- **GAYLORD, N.G. ; DESHPANDE, A.B. ; MANDAL, B.M. ; MARTAN, M.** *J. Macromol. Sci.-Chem.,* 1977, vol. A11 (5), 1053-1070
- **KAMINSKY, W. ; BARK, A. ; DRAKE, I.** *Stud. Surf. Catal.,* 1990, vol. 56, 425
- **SEN et al.** *J. Am. Chem. Soc.,* 1981, vol. 103, 4627-4629
- **SEN et al.** *Organometallics,* 2001, vol. 20, 2802-2812
- **KAMINSKY et al.** *Angew. Chem. Int. Ed.,* 1985, vol. 24, 507
- **BROOKHART et al.** *Chem. Rev.,* 2000, vol. 100, 1169
- **RESCONI et al.** *Chem. Rev.,* 2000, vol. 100, 1253
- **KAMINSKY et al.** *Macromol. Symp.,* 1995, vol. 97 (225